(19) Europäisches Patentamt
European Patent Office
Office européen des brevets

(11) **EP 4 513 167 B1**

(12) **EUROPEAN PATENT SPECIFICATION**

(45) Date of publication and mention
of the grant of the patent:
**13.05.2026 Bulletin 2026/20**

(51) International Patent Classification (IPC):
**B01D 21/26** *(2006.01)*     **B01D 21/32** *(2006.01)*
**B01L 3/00** *(2006.01)*     **G01N 15/14** *(2024.01)*

(21) Application number: **24223217.1**

(52) Cooperative Patent Classification (CPC):
**B01D 21/265;** G01N 15/0656; G01N 15/075;
G01N 2015/0053

(22) Date of filing: **25.11.2020**

(54) **SYSTEMS FOR SEPARATING PARTICLES IN FLUIDS**

SYSTEME ZUR TRENNUNG VON PARTIKELN IN FLÜSSIGKEITEN

SYSTÈMES DE SÉPARATION DE PARTICULES DANS DES FLUIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2019 US 201962942009 P**

(43) Date of publication of application:
**26.02.2025 Bulletin 2025/09**

(62) Document number(s) of the earlier application(s) in
accordance with Art. 76 EPC:
**20828202.0 / 4 065 251**

(73) Proprietor: **Donaldson Company, Inc.
Bloomington, MN 55431 (US)**

(72) Inventors:
• **MORAVEC, Davis B.
Minneapolis, Minnesota 55440-1299 (US)**
• **QUAM, Daryl L.
Minneapolis, Minnesota 55440-1299 (US)**
• **DALLAS, Andrew J.
Minneapolis, Minnesota 55440-1299 (US)**
• **YODER, Mikayla A.
Minneapolis, Minnesota 55440-1299 (US)**
• **LAUER, David D.
Minneapolis, Minnesota 55440-1299 (US)**

(74) Representative: **PGA S.p.A., Milano, Succursale
di Lugano
Via Castagnola, 21c
6900 Lugano (CH)**

(56) References cited:
CN-A- 101 765 762     CN-A- 108 318 394
US-A1- 2012 122 084     US-A1- 2019 084 011

## Description

The present disclosure relates to separating particles. In particular, the present disclosure relates to separating particles in fluids.

Particles dispersed in fluid may be problematic in certain systems, such as engine fuel systems, bulk fuel systems, hydraulic systems, or other systems for handling or storing fluid. For example, particles of water (or water droplets) in fuel may be problematic in engine fuel systems of internal combustion engines. Water in fuel may damage fuel injectors due to corrosion or vaporization during combustion. Damage to injectors may cause various problems in operation of the engine, such as failing to be able to comply with jurisdictional emission standards. Fuel injector damage may require repair or maintenance. Reduced operating time may be particularly costly for commercial or industrial vehicles. In general, the presence of gaseous, liquid, or solid particles dispersed in fluid may cause issues in various fluid systems, such as bulk fuel systems, hydraulic systems, etc. Traditional fluid filters capture particles in a media structure. The media structure may become plugged over time requiring maintenance or filter replacement.
US2012/122084 A1 and US2019/084011 A1 disclose systems configured to sort cells by determining individual cell characteristics and comprising means for directing each cell toward a corresponding outlet based on such characteristics. CN108318394A and CN101765762A discloses devices for focusing particles suspended within a moving fluid into one or more localized stream lines.

SUMMARY

A system according to the invention is disclosed in claims 1 to 11.
The techniques of this disclosure generally relate to focusing certain particles in fluid in various fluid systems and separating those certain particles from the fluid or from particles of other sizes. In general, fluid systems may include particle separation elements, such as hydrodynamic separation elements, to focus particles in a particular size range. The particle separation element may include an inlet and an outlet having at least two flow branches. Particles of the particular size range may be focused into one of the two flow branches. In some embodiments, particles exceeding a threshold size range are focused into one of the two flow branches. Any remaining particles may flow through the at least two flow branches. In some embodiments, the particle separation element may be used to supplement or replace a fluid filter.

BRIEF DESCRIPTION OF THE DRAWINGS

Various embodiments of the disclosure are illustrated in the drawings, which are summarized as follows:

FIG. 1 is a conceptual diagram showing one example of a fluid system including a particle separation element configured to receive a flow of fluid from a fluid source according to the present disclosure.
FIG. 2 is a conceptual diagram showing one example of a fluid system that may be used to handle fuel on machine usable with the particle separation element of FIG. 1.
FIG. 3 is a conceptual diagram showing one example of a fluid system that may be used to handle bulk fuel usable with the particle separation element of FIG. 1.
FIG. 4 is a conceptual diagram showing one example of a fluid system that may be used to deliver hydraulic fluid usable with the particle separation element of FIG. 1.
FIG. 5 is a conceptual diagram showing one example of a fluid system that may be used to deaerate hydraulic fluid usable with the particle separation element of FIG. 1.
FIG. 6 is a conceptual diagram showing one example of an optical or light-based particle sensor that may be usable in the particle sensor of FIG. 1.
FIG. 7 is a conceptual diagram showing one example of an arrangement for using the particle sensor of FIG. 1 relative to a microfluidic channel.
FIG. 8 is a conceptual diagram showing another example of an arrangement for using the particle sensor of FIG. 1 relative to a microfluidic channel.
FIGS. 9-10 are conceptual diagrams showing another arrangement for using the particle sensor of FIG. 1 with a particle separation element and a microfluidic sensing element.
FIGS. 11A-B are conceptual diagrams showing one example of a technique for counting the number of particles in multiple microfluidic channels using a shared light detector usable with the particle sensor of FIG. 1.
FIG. 12 is a conceptual diagram showing one example of a fluid system that may be used to remove particles usable with the particle separation element of FIG. 1.
FIGS. 13A-D are images and plots showing the hydrodynamic separator device and pixel intensity versus channel position, respectively.
FIG. 14 is a conceptual diagram showing relative positions of angles around a hydrodynamic separator device of **FIGS. 13A-D.**
**FIG. 15** is a plot showing percent focused versus channel length for a hydrodynamic separator device of **FIGS. 13A-D.**

DETAILED DESCRIPTION

In the following detailed description, reference is made to several specific embodiments. It is to be understood that other embodiments are contemplated and may be made without departing from the scope or spirit of the present disclosure. The following detailed description, therefore, is not to be taken in a limiting sense.

This disclosure provides techniques to focus certain particles in fluid in various fluid systems and to separate those certain particles from the fluid or from particles of other sizes. In general, fluid systems may include particle separation elements, such as hydrodynamic separation elements, to focus particles in a particular size range. The particle separation element may include an inlet and an outlet having at least two flow branches. Particles of the particular size range may be focused into one of the two flow branches. In some embodiments, particles exceeding a threshold size range are focused into one of the two flow branches. Any remaining particles may flow through the at least two flow branches. In some embodiments, the particle separation element may be used to supplement or replace a fluid filter.

Particle separation elements, which may include hydrodynamic separation elements, may be used as filter replacements or supplements. In particular, particle separation elements may be used to concentrate particles above a critical size into a portion of a fluid flow. This portion of the fluid flow may be removed from the system, thus removing most particles exceeding a threshold size. In some cases, this may replace some or all of the functionality of a filter. The performance of particle separation elements may not change over time and may not need regular replacement. In some embodiments, a filter may be used downstream of the particle separation element to remove particles below the threshold size. Further, in some embodiments, the particles focused by the particle separation element are filtered. This may be done at a lower face velocity than in a system without a particle separation element, and thus lead to a lower filter pressure drop and longer filter life.

Particle separation elements, which may include hydrodynamic separation elements, may also be used to sort particles of different sizes. In some applications, a threshold size may be determined. The particle separation element may be designed to concentrate particles above the threshold size into a concentrated fluid portion of a fluid flow. The concentrated portion of the fluid flow may be removed from the system. This technique may be used to concentrate particles for particle counting. This technique may also be used to separate different types of particles or to concentrate certain materials for collection.

A microfluidic particle sensor, or microfluidic sensing element, may be used for detecting individual contaminants in a fluid, such as a liquid stream. A separator or segmentation stage may be positioned upstream from the particle sensor. The segmentation stage, or particle separation element, may separate particles into different fluid streamlines based on particle size. This could be accomplished, for example, with Dean Flow Separation. Once particles are in streamlines based on their particle size, the streamlines are sent into different sensing channels of a microfluidic sensing element. The sensing channels are associated with particle sensors that count the number of particles. By knowing the number of particles in each sensing channel an approximate particle size distribution may be determined. The sensor may be an optical sensor, capacitance sensor, magnetic sensor, or other sensor. Alternatively, the particle sensor may contain only a microfluidic channel and a sensor. Use of the microfluidic channel may increase sensitivity for individual contaminants relative to other techniques, such as Mie scattering. Signal processing may also be used to identify contaminant type.

Further, particle separation elements, which may include hydrodynamic separation elements, may be used for selective particle waste removal. In some cases, only particles above a certain size may be targeted for removal from a system. Uses for selective particle waste removal may include, but are not limited, to: removal or concentration of fats in milk (fats are typically 0.1 to 15 micrometer agglomerates), removal or concentration of orange juice pulp, removal of contaminates in semi-conducting processing fluids, and removal of ink agglomerates in industrial ink processing. In one example related to wafer polishing slurries, particle separation elements may be designed to remove particles above a threshold size, which may be agglomerates or impurities, while letting particles below the threshold size through.

**Definitions**

**Particle**

As used herein, the term "particle" refers to a discrete amount of material, which may be dispersed in a different fluid. Non-limiting examples of material that may be formed particles include dirt, metal, air bubbles, and water droplets. In one particular example, water droplets may be dispersed in a hydrocarbon fluid, such as gasoline or diesel fuel, to form an emulsion. In another example, air bubbles may be dispersed in a hydraulic fluid.

**Upstream/downstream**

As used herein, the term "downstream" refers to a direction along a fluid flow. The term "upstream" refers to the opposite of downstream, or a direction opposite to the fluid flow.

**Microfluidic channel**

As used herein, the term "microfluidic channel" refers to a channel having at least one dimension less than 1 millimeter (1000 micrometers). A microfluidic channel may have a channel width less than 1000 micrometers, a channel height (or depth) less than 1000 micrometers, or both. In some embodiments, for higher flow applications, at least one dimension of the microfluidic channel may be greater than 1 millimeter. In some embodiments, at least one dimension of the microfluidic channel is greater than or equal to 1, 2, 3, 4, 5, 6, 7, 8, 9, or 10 millimeters or less than or equal to 10, 9, 8, 7, 6, 5, 4, 3, or 2 millimeters. In general, the channel may have any suitable length to provide a suitable pressure drop balanced with suitable particle focusing.

Microfluidic channels may be described by a cross-sectional area, *width* × *height.* In some embodiments, the cross-sectional area of the microfluidic channel may be less than 10, 9, 8, 7, 6, 5, 4, 3, or 2 millimeters squared.

Microfluidic channels may also be described by a hydraulic diameter. For a microfluidic channel having a rectangular cross-section, for example, the hydraulic diameter may be calculated as:

$$D_H = \frac{2 \times height \times width}{height + width} \qquad (Eq.\ 1)$$

where $D_H$ is the hydraulic diameter. Other cross-sectional shapes may be calculated according to techniques known to one of ordinary skill in the art having the benefit of this disclosure. In some embodiments, the hydraulic diameter of the microfluidic channel may be less than 5, 4, 3, 2, or 1 millimeter. In at least one embodiment, the hydraulic diameter of the microfluidic channel of the microfluidic channel may be less than 1 millimeter.

**Hydrodynamic separator**

As used herein, the term "hydrodynamic separator" refers to a curved fluid channel including, at least, an inlet to receive a fluid flow and an outlet including at least two branches to divide the fluid flow. The fluid channel may be a microfluidic channel. The inlet may receive a fluid that may contain particles of various sizes. At a particular flow rate, the hydrodynamic separator is configured to focus any particles exceeding a threshold size into one the branches. Any remaining particles are not focused in the fluid flow. The remaining particles may be divided among all branches, for example, based on a volume fractions, or outlet flow rate ratios, associated with each branch. Hydrodynamic separators may be designed based on at least one or more of the following parameters: a Dean number, a Reynolds number, a hydraulic diameter, a radius of curvature, a target flow rate, target pressure drop, critical particle size, fluid viscosity, operating temperature (which may affect fluid viscosity), a ratio of outlet flow rates, or any combination of these. Hydrodynamic separators may also be described as Dean Flow Separators.

In general, hydrodynamic separators include curving microfluidic channels designed to focus particles exceeding a threshold size to the inside wall of the curve. The cross-sectional area of the microfluidic channel limits the maximum particle size that may enter the microfluidic channel. The device defines a geometry (such as width, height, radius of curvature, and channel length) designed to focus particles in a known fluid at a specific flow rate or flowrate range. The focused particles close to the inner wall may then be removed from the system by removing a portion of the fluid close to the inner wall. In other embodiments, depending on the device geometry and operating conditions, the particles and the waste stream may alternatively be focused close to the outer wall. The design of the device may be dependent on application flow rate, fluid properties (such as viscosity and density), and threshold particle size. The hydrodynamic separator may act as a filter or as a pre-filter in a system.

Curving microfluidic channels can be used to focus particles of a pre-determined size under appropriate flow conditions. In a curving channel or pipe under laminar flow conditions, the inertia of the fluid creates a pressure gradient across the channel. To alleviate the pressure gradient, two spiraling flows known as Dean Flows (sometimes referred to as secondary flows) may form. The Dean Flow may exhibit drag on any particles in the fluid. In larger channels, the particles may be swept along the channel in a spiraling motion. When channels become smaller, such as in microfluidic channels, the Dean Flow can be balanced with two additional forces such that particles can become trapped and focused on the inner wall of the curving channel. These forces may be described the shear-induced lift force, which causes a lift force towards the wall, and the wall-induced lift force that pushes the particle away from the wall due to bounding of fluid flow as the particle approaches the wall. Particles may be focused into a specific streamline within the curving channel. Focusing particles in this manner may be referred to as Hydrodynamic Separation or Dean Flow Separation.

**Flow routing element**

As used herein, a "flow routing element" refers to a component configured to allow for selective routing of a fluid flow leaving a fluid channel. Non-limiting examples of components of a flow routing element include a valve or a solenoid. In one example, a flow routing element may include one or more valves configured to divert flow to one or more branches in any suitable manner.

**Dean number**

The Dean number describes fluid behavior in a curved pipe and accounts for inertial forces, centripetal forces, and viscous forces acting on the fluid. In various embodiments, the system is configured to have a Dean Number between 5 and 25. The Dean number is defined as:

$$De = Re \sqrt{\frac{D_H}{2R_c}} \qquad (Eq.\ 2)$$

where Re is the Reynolds number and Rc is the radius of curvature of the fluid channel.

**Reynolds number**

The Reynolds number describes the ratio of inertial forces to viscous forces, and is defined as:

$$Re = \frac{\rho U D_H}{\mu} \qquad (Eq.\ 3)$$

where $\rho$ is the fluid density, U is the average fluid velocity, and $\mu$ is the dynamic viscosity of the fluid.

Reference will now be made to the drawings, which depict one or more aspects described in this disclosure. However, it will be understood that other aspects not depicted in the drawings fall within the scope of this disclosure. Like numbers used in the figures refer to like components, steps, and the like. However, it will be understood that the use of a reference character to refer to an element in a given figure is not intended to limit the element in another figure labeled with the same reference character. In addition, the use of different reference characters to refer to elements in different figures is not intended to indicate that the differently referenced elements cannot be the same or similar.

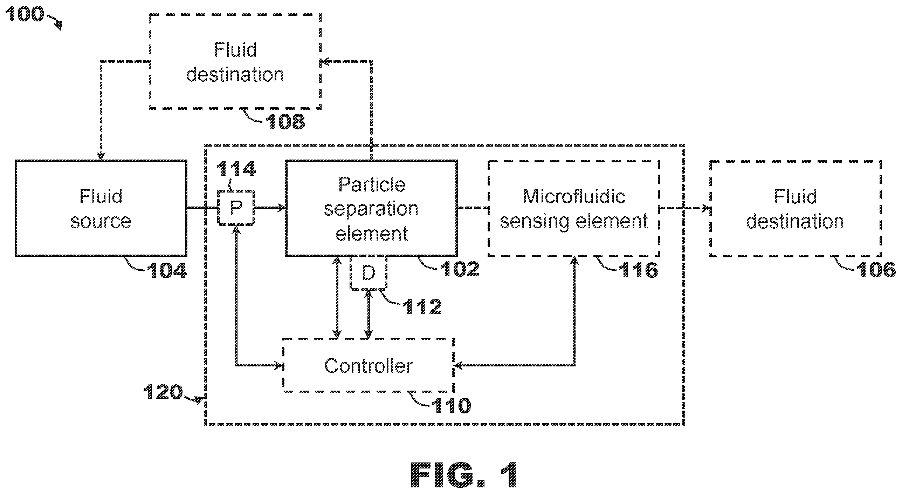

FIG. 1 is a conceptual diagram showing one example of a fluid system **100** including a particle separation element **102** configured to receive a flow of fluid from a fluid source **104.** The fluid system **100** may be any suitable type of system that may benefit from using the particle separation element **102,** such as an engine fuel system, a bulk fuel system, or a hydraulic system. The fluid source **104** may be configured to contain a fluid, which may contain particles. The particle separation element **102** may be used as a filter to facilitate removal of particles in a particular size range from the fluid. For example, particles considered to be contaminants or waste may be removed. Additionally, or alternatively, the particle separation element **102** may be used to facilitate sorting particles of different sizes. The sorting of particles of different sizes may allow the fluid system **100** to determine how many particles are within different size ranges.

The particle separation element **102** may be fluidly coupled between the fluid source **104** and a fluid destination, such as optional fluid destinations **106, 108.** The particle separation element **102** may be positioned downstream of the fluid source **104.** The particle separation element **102** may be positioned upstream of the fluid destinations **106, 108.** The fluid destination **106** may be a component of the fluid system **100** that stores, uses, or consumes, the fluid, such as fuel being consumed by an engine. The fluid destination **108** may be a component of the fluid system **100** that uses the fluid and returns the fluid to the fluid source **104,** such as a hydraulic fluid used in a hydraulic piston. The particle separation element **102** may remove particles in a particular size range from the fluid before providing the fluid to one of the fluid destinations **106, 108.**

The particle separation element **102** may include any suitable components usable to remove particles or sort particles in the fluid. In some embodiments, the particle separation element **102** includes a hydrodynamic separation element. In general, the particle separation element **102,** which may include the hydrodynamic separation element, may not become loaded with particles and may not change performance over time or require regular replacement.

The hydrodynamic separation element may include one or more hydrodynamic separators. In some embodiments, the hydrodynamic separators are arranged in parallel. The channel length and arrangement of the hydrodynamic separators may be designed to provide target pressure drops.

In some embodiments, the particle separation element **102** includes a flow routing element. The flow routing element may be disposed in the outlet of the particle separation element **102**. Flow routing element may include one or more valves or solenoids to divert the flow of fluid.

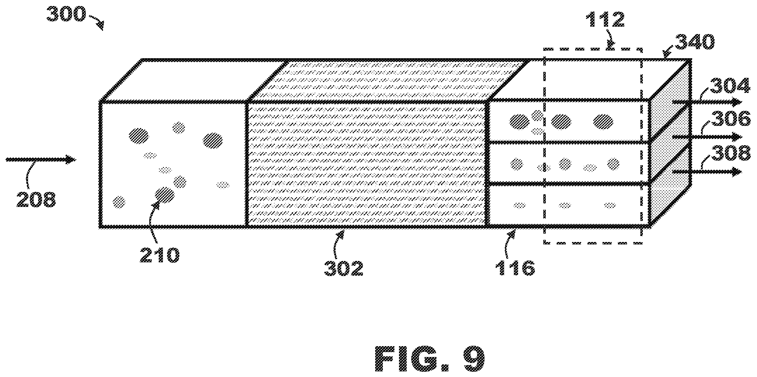

In general, the particle separation element **102** includes an outlet having at least two different branches. The fluid flow may be divided between the different branches. In some embodiments, using the hydrodynamic separation element, all particles in particular size range may be focused into one of the branches. Each branch may be associated with particles in different size ranges (see **FIGS. 9-10).**

Each branch may be directed to, or in fluid communication with, a different fluid destination. In some embodiments, one branch may be directed to the fluid destination **106** and another branch may be directed to the fluid destination **108.**

A fluid pump **114** may be used to control a flow rate of fluid through the particle separation element **102.** The fluid pump **114** may be positioned in any suitable location relative to the particle separation element **102** to facilitate control of the flow rate, such as upstream, downstream, or integrated with the particle separation element. In the illustrated embodiment the fluid pump **114** is positioned upstream from the particle separation element **102.**

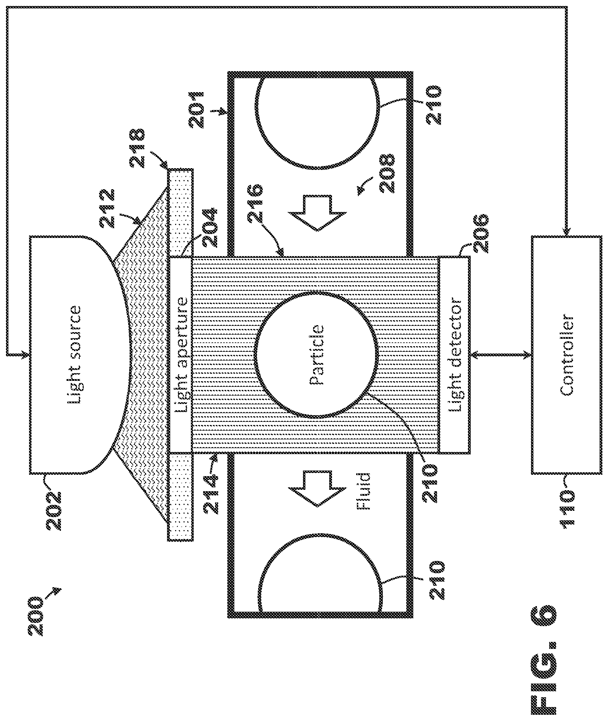

A particle sensor **112** may be used to detect any particles in the fluid flow. The particle sensor **112** may be positioned in any suitable location relative to the particle separation element **102** to facilitate detection of certain particles, such as upstream, downstream, or integrated with the particle separation element. In some embodiments, particle sensor **112** may be positioned between the inlet and the outlet of the particle separation element **102.** The particle sensor **112** may use any suitable type of mechanism to detect particles in the fluid. For example, the particle sensor **112** may include or be a light-based particle sensor **200 (FIG. 6)** or a capacitance-based sensor.

A microfluidic sensing element **116** may be used to sense particles of different sizes from one or more of the branches of the particle separation element **102.** The microfluidic sensing element **116** is shown positioned downstream of the particle separation element **102.** In some embodiments, the microfluidic sensing element **116** may be described as being part of particle separation element **102.** The microfluidic sensing element **116** may include one or more microfluidic sensing channels. In some embodiments, the microfluidic sensing channels are arranged in parallel. The channel length and arrangement of the microfluidic sensing channels may be designed to provide target pressure drops and particle focusing.

Each microfluidic channel may be fluidly coupled to one of the branches of the particle separation element **102.** The microfluidic sensing element **116** may also include one or more particle sensors **112** to detect different sizes of particles that have been sorted by the particle separation element **102.** The microfluidic sensing element **116** may also be used to determine whether the particle separation element **102** has successfully removed some or all particles in a particular size range. The microfluidic sensing element **116** may also include a flow routing element. The flow routing element may be used to facilitate removal of particles in a particular size range.

A fluid subsystem **120** may be defined which may include one or more of: the particle separation element **102,** the fluid pump **114,** the microfluidic sensing element **116,** and a controller **110.** The controller **110** may be used to facilitate various functionality of the fluid subsystem **120** described herein.

Various configurations of the fluid system **100** are contemplated. Non-limiting examples of further configurations and various components of the fluid system **100** are shown and described herein in more detail.

In one example, which may be described as a kidney loop filter (not shown), the fluid pump **114** may be used to provide a fluid flow from the fluid source **104,** or source reservoir, through the particle separation element **102,** which may include a hydrodynamic separator element, that returns a main flow to the fluid source **104** through a filter. Industrial systems with liquid fluids can use kidney loop filtration systems to remove particles. The particle separation element **102** may be used between the fluid pump **114** and filter. The particle separation element **102** may provide a main outlet flow to the fluid source **104** and return a secondary outlet flow containing certain particle to the filter, which may concentrate particles and minimize the volume of fluid that needs to be filtered as well as lower the face velocity, which may decrease the filter pressure drop.

One or more of the components, such as the controllers, sensors, detectors, or systems, described herein may include a processor, such as a central processing unit (CPU), computer, logic array, or other device capable of directing data coming into or out of the component. The processor may include one or more computing devices having memory, processing, and communication hardware. The processor may include circuitry used to couple various components of the controller together or with other components operably coupled to the controller. The functions of the processor may be performed by hardware and/or as computer instructions on a non-transient computer readable storage medium.

The processor may include any one or more of a microprocessor, a microcontroller, a digital signal processor (DSP), an application specific integrated circuit (ASIC), a field-programmable gate array (FPGA), and/or equivalent discrete or integrated logic circuitry. In some examples, the processor may include multiple components, such as any combination of one or more microprocessors, one or more controllers, one or more DSPs, one or more ASICs, and/or one or more FPGAs, as well as other discrete or integrated logic circuitry. The functions attributed to the processor herein may be embodied as software, firmware, hardware, or any combination thereof.

In one or more embodiments, the functionality of the processor may be implemented using one or more computer programs using a computing apparatus, which may include one or more processors and/or memory. Program code and/or logic described herein may be applied to input data/information to perform functionality described herein and generate desired output data/information. The output data/information may be applied as an input to one or more other devices and/or methods as described herein or as would be applied in a known fashion. In view of the above, it will be readily apparent that the controller functionality as described herein may be implemented in any manner known to one skilled in the art.

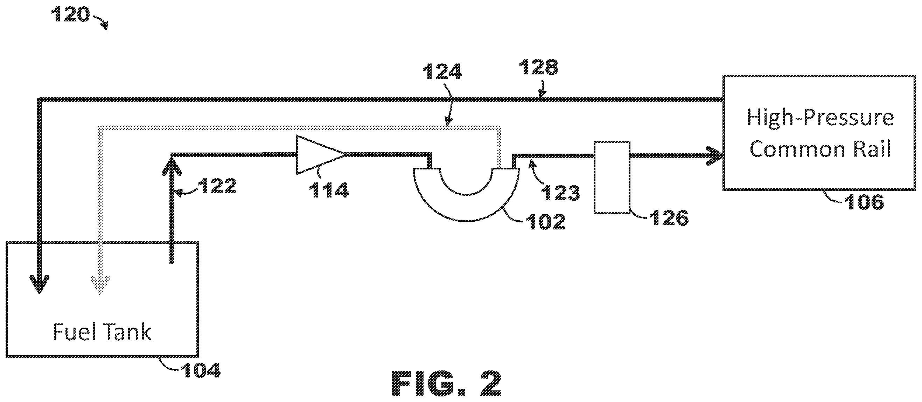

FIG. 2 is a conceptual diagram showing one example of a fluid system that may be used to handle fuel on machine using the particle separation element **102.** The particle separation element **102,** which may include a hydrodynamic separator element, may be used on a fluid system **120,** such as an engine fuel system, and may replace the use of a primary filter along a main fuel line **122.** In an engine fuel system, the lift pump pulls fluid from the fuel tank and pushes the fluid to the high-pressure common rail. Some fuel may be returned from the fuel injector system to the fuel tank with a fuel return line **128.**

As illustrated, the fluid pump **114,** such as a fuel pump or lift pump, may be used to provide a fluid flow, such as fuel, from the fluid source **104,** such as a fuel tank, through the particle separation element **102** through the main fuel line **122.** The particle separation element **102** may provide a main outlet flow along the main fuel line **122** using a first flow branch **123** to the fluid destination **106,** such as a fuel injector system, which may include a high-pressure common rail, and return a secondary outlet flow containing certain particles to the fluid source **104** along a second flow branch **124.** Non-limiting examples of particles include dirt and water droplets.

The particle separation element **102** may be positioned upstream or downstream of the fluid pump **114.** In the illustrated embodiment, the particle separation element **102** is positioned downstream of the fluid pump **114.** A filter **126** may be positioned downstream of the particle separation element **102** along the main fuel line **122.** The filter **126,** or fuel filter, may be configured to filter particles from gasoline or diesel fuel. The fluid system **120** may also include a fuel return line **128** from the fluid destination **106** to the fluid source **104.** In other embodiments (not shown), the filter **126** may be positioned along, or another filter **126** may also be positioned along, the second flow branch **124,** which may filter particles at a lower flowrate and pressure drop.

The particle separation element **102** may be configured to remove particles exceeding, or greater than, a particular threshold size in diameter from the main fuel line **122** while the fluid pump **114** provides fuel at a particular flow rate for engine operation and provide such particles to the second flow branch **124.** Non-limiting examples of particular threshold sizes include 1, 2, 5, 10, 15, or 20 micrometers.

The outlet of the particle separation element **102** may be described as having two outlet flows: a "clean" outlet flow along the first flow branch **123** to main fuel line **122** and a "dirty" outlet flow along the second flow branch **124.** The clean outlet flow may be predominately free of particles above the threshold size. The clean outlet flow may be sent to the filter **126** and ultimately the fluid destination **106,** shown as a high-pressure common rail of a fuel injector system. The dirty outlet flow may contain most of the particles above the critical size. The dirty stream may be sent back to the fluid source **104,** shown as a fuel tank. In other embodiments, the dirty outlet flow may be combined with the fuel return line coming from the high-pressure common rail system. In other words, the second flow branch **124** may be fluidly coupled to the fuel return line **128** before returning to the fluid source **104.** The particle separation element **102** may have a mechanism to control the dirty outlet flow along second flow branch **124,** such as a valve (not shown), to facilitate operation as filter pressure restriction increases over time due to loading of the filter **126** along the first flow branch **123.**

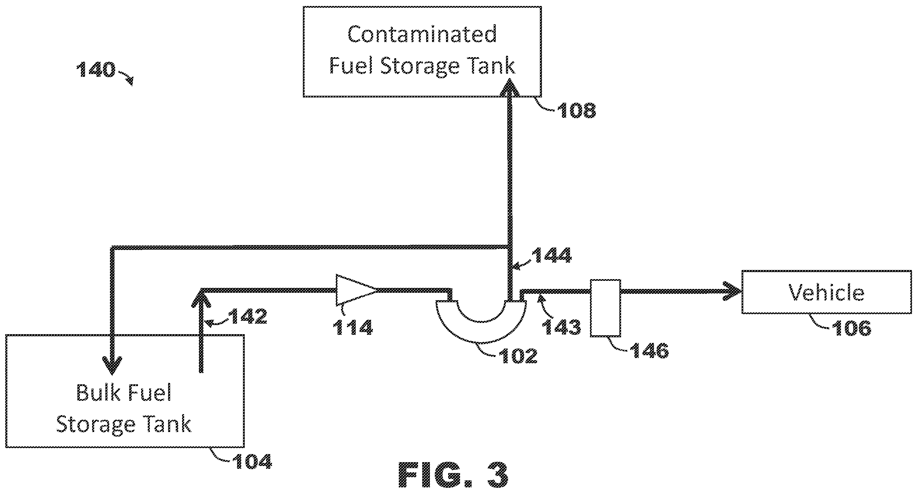

FIG. 3 is a conceptual diagram showing one example of a fluid system that may be used to handle bulk fuel using the particle separation element **102.** The particle separation element **102,** which may include a hydrodynamic separator element, may be used on a fluid system **140,** such as a fuel dispensing station, and may be used to remove particles before providing the fuel to the fluid destination **106,** such as a vehicle.

As illustrated, the fluid pump **114** may be used to provide a fluid flow, such as fuel, from the fluid source **104,** such as a bulk fuel storage tank, through the particle separation element **102** to a main fuel line **142.** The particle separation element **102** may provide a main outlet flow along the main fuel line **142** using a first flow branch **143** to the fluid destination **106,** such as a vehicle, and a secondary outlet flow containing certain particles to return to the fluid source **104** along a second flow branch **144** or to send to the fluid destination **108,** such as a secondary storage tank. Non-limiting examples of particles include dirt and water droplets.

The particle separation element **102** may be positioned upstream or downstream of the fluid pump **114.** In the illustrated embodiment, the particle separation element **102** is positioned downstream of the fluid pump **114.** A filter **146** may be positioned downstream of the particle separation element **102** along the main fuel line **122.** The filter **146,** or fuel filter, may be configured to filter particles from gasoline or diesel fuel. The fluid system **120** may also include a fuel return line **128** from the fluid destination **106** to the fluid source **104.** In other embodiments (not shown), the filter **146** may be positioned along, or another filter **146** may also be positioned along, the second flow branch **144,** which may filter particles at a lower flowrate and pressure drop.

The particle separation element **102** may be configured to remove particles greater than a particular threshold size in diameter from the main fuel line **122** while the fluid pump **114** provides fuel at a particular flow rate appropriate for the fuel dispensing station and provide such particles to the second flow branch **144.**

The outlet of the particle separation element **102** may be described as having two outlet flows: a "clean" outlet flow along the first flow branch **143** to main fuel line **142** and a "dirty" outlet flow along the second flow branch **144.** The clean outlet flow may be predominately free of particles above the threshold size. The clean outlet flow may be sent to the filter **126** and ultimately the fluid destination **106,** shown as a high-pressure common rail system. The dirty outlet flow may contain most of the particles above the critical size. The dirty outlet flow may be sent back the fluid source **104,** shown as bulk fuel storage tank, or may be sent to the fluid destination **108,** shown as a separate tank for containing the dirty or contaminated fuel. The particle separation element **102** may have a mechanism to control the dirty outlet flow along second flow branch **144,** such as a valve (not shown), to facilitate operation as filter pressure restriction increases over time due to loading of the filter **146** along the first flow branch **143.**

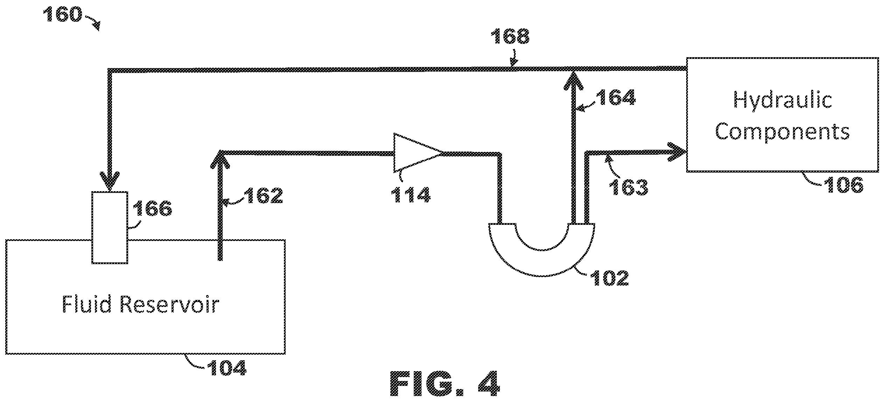

FIG. 4 is a conceptual diagram showing one example of a fluid system that may be used to deliver hydraulic fluid using the particle separation element **102.** The particle separation element **102,** which may include a hydrodynamic separator elements, may be used on a fluid system **160,** such as a hydraulic cylinder system, and may be used to remove particles before providing the hydraulic fluid to hydraulic components, such as an actuating cylinder, to protect the hydraulic components from particles.

As illustrated, the fluid pump **114,** such as a hydraulic pump, may be used to provide a fluid flow from the fluid source **104,** such as a hydraulic fluid reservoir, through the particle separation element **102** to a main fluid line **162.** The fluid source **104** may be in fluid communication with an inlet of the fluid pump **114.** The particle separation element **102** may provide a main outlet flow along the main fluid line **162** using a first flow branch **163** to the fluid destination **106,** such as a hydraulic component, which may include an actuator cylinder, and a secondary outlet flow containing certain particles to return to the fluid source **104** along a second flow branch **164.** Non-limiting examples of particles include dirt, air bubbles, or water droplets. The fluid system **160** may also include a fluid return line **168** from the fluid destination **106** to the fluid source **104.** The second flow branch **164** may be fluidly coupled to the fluid return line **168** before returning to the fluid source **104.**

The particle separation element **102** may be positioned upstream or downstream of the fluid pump **114.** In the illustrated embodiment, the particle separation element **102** is positioned downstream of the fluid pump **114.** A hydraulic fluid filter **166** may be positioned downstream of the particle separation element **102** along the second flow branch **164,** the fluid return line **168,** or both. As illustrated, the second flow branch **164** and the fluid return line **168** are combined before reaching the filter **166.** The filter **166** may be in fluid communication with the fluid source **104.**

The outlet of the particle separation element **102** may be described as having two outlet flows: a "clean" outlet flow along the first flow branch **163** to main fluid line **162** and a "dirty" outlet flow along second flow branch **164.** The clean outlet flow may continue to the fluid destination **106,** shown as hydraulic components. The dirty outlet flow may combine with the fluid return line **168,** which would go through the filter **166** before returning to the fluid source **104,** shown as fluid reservoir. The particle separation element **102** may be designed to operate over the range of temperatures, flows, and system configurations (e.g. extension of a hydraulic cylinder).

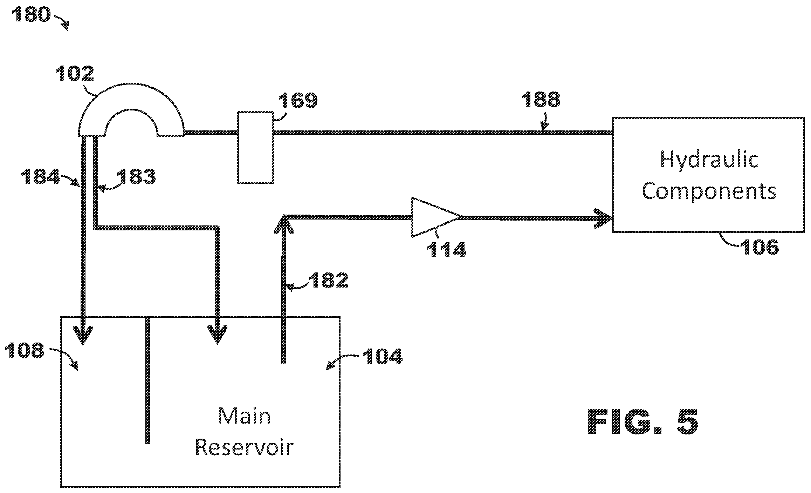

FIG. 5 is a conceptual diagram showing one example of a fluid system that may be used to deaerate hydraulic fluid using the particle separation element **102.** The particle separation element **102,** which may include a hydrodynamic separator elements, may be used on a fluid system **180,** such as a hydraulic cylinder system, and may be used to remove nucleated air bubbles before returning the hydraulic fluid to the fluid source **104,** such as a main hydraulic fluid reservoir, to protect the fluid destination **106,** such as hydraulic components, from air bubbles.

As illustrated, the fluid pump **114,** such as a hydraulic fluid pump, may be used to provide a fluid flow from the fluid source **104,** such as a main hydraulic fluid reservoir, along a main fluid line **182** to the fluid destination **106,** such as a hydraulic component, which may include an actuator cylinder. A return fluid flow may be provided from the fluid destination **106** to a nucleation filter **169** to nucleate air bubbles in the fluid along the fluid return line **188.** The particle separation element **102** may be positioned downstream of the nucleation filter **169.** The nucleation filter **169** may be in fluid communication with an inlet of the particle separation element **102** and the fluid destination **106.** The particle separation element **102** may provide a main outlet flow along the fluid return line **188** using a first flow branch **183** to the fluid source **104** and a secondary outlet flow containing certain particles to the fluid destination **108,** such as a settling reservoir or an aerated oil collection volume, along a second flow branch **184.** The fluid destination **108** may be in fluid communication with the fluid source **104** with restricted flow to allow the aerated hydraulic fluid to collect and settle.

The fluid in a hydraulic fluid system **180** is pressurized by the fluid pump **114.** The highly pressurized fluid can dissolve more air. When the fluid de-pressurizes in the fluid return line **188,** the fluid can become super-saturated with air, which may lead to nucleation and formation of air bubbles in the fluid stream. The air bubbles may be removed before the fluid is picked up by the fluid pump **114** again. Air bubbles that reach the fluid pump **114** may cause cavitation, which may be loud and may damage the fluid pump. The nucleation filter **169** may be used to nucleate and grow air bubbles. The air-bubble-laden fluid may be sent through the particle separation element **102,** which may include a hydrodynamic separator. The air bubbles may be concentrated into an "aerated oil return" outlet flow along the second flow branch **184.** The aerated oil return outlet flow may be returned to the fluid destination **108,** or settling reservoir, in a volume that allows for natural bubble settling. The fluid destination **108** may be a separate compartment in the same container as fluid destination **106.** The "main return" along outlet flow, which does not have air bubbles, is sent to the fluid destination **106** along the fluid return line **188** and may be immediately available for the fluid system **180** to use.

**FIG. 6** is a conceptual diagram showing one example of an optical or light-based particle sensor **200** that may be used in, or as, the particle sensor **112 (FIG. 1).** In general, any suitable type of particle sensor may be used including those described in, for example, PCT Application No. PCT/US2019/034809, filed May 31, 2019, When the particle sensor **200** is used to detect droplets of fluid, the particle sensor **200** may be described as a droplet sensor. The particle sensor **200** may be operably coupled to the controller **110** and optically coupled to a microfluidic channel **201,** which may be part of a hydrodynamic separator of the particle separation element **102 (FIG. 1)** or part of microfluidic sensing element **116 (FIG. 1).**

As illustrated, the particle sensor **200** includes a light source **202,** a light aperture **204,** and a light detector **206.** The controller **110** may operably connected to the light detector **206** and may also be operably connected to the light source **202.**

The microfluidic channel **201** is configured to receive a flow of the fluid **208.** The microfluidic channel **201** may have any suitable cross-sectional shape, such as rectangular, circular, or ovate. The particle sensor **200** may be configured to detect and characterize the particles **210,** such as liquid droplets, air bubbles, dirt, metal, in the flow of the fluid **208** that may flow through the microfluidic channel **201.**

The particles **210** may be dispersed in the fluid **208** in the microfluidic channel **201.** For example, the particles **210** may be suspended in the fluid **208** in a separate phase or be made of a different composition or material. In other words, the particles **210,** which may be liquid, are not dissolved in the fluid **208.** In one example, the particles **210** may include a different fluid than the fluid **208.**

In general, the microfluidic channel **201** is sized to receive one or more of the particles **210** at a time. In some embodiments, the microfluidic channel **201** has a cross-sectional area sized to receive one particle **210** of a predetermined size at a time. In particular, the cross-sectional area of the microfluidic channel **201** may be about the same size as a cross-sectional area of the particle **210,** which may facilitate counting one particle **210** at a time to facilitate accurate counting and sizing of the particle **210.**

The cross-sectional area may be defined orthogonal to the direction of the flow of the fluid **208.** In other words, the cross-sectional area may be described as transverse to a longitudinal flow of the fluid **208.** Cross-sectional area may be defined as a channel height (or depth) multiplied by a channel width. Both channel height and channel width may be orthogonal to the direction of the flow of the fluid **208.** In some embodiments, the channel depth is less than or equal to the channel width. Using a relatively shallow channel depth may prevent the particles **210** from stacking between the light source 202 and the light detector **206,** or hiding behind one another, as the particles flow through the microfluidic channel **201,** which increases the opportunity for each particle to be detected.

**Light Source**

In the illustrated embodiment, the light source **202** is positioned outside of the microfluidic channel **201.** At least one light aperture **204** is positioned between the light source **202** and the light detector **206.** In some embodiments, the light aperture **204** is positioned before the microfluidic channel **201,** for example, between the light source **202** and the microfluidic channel **201.** In some embodiments, the light aperture **204** is positioned after the microfluidic channel **201,** for example, between the microfluidic channel **201** and the light detector **206.**

The light source **202** is configured to direct the light **212** through the light aperture **204** to form the light beam **214.** The light beam **214** is directed to pass through the microfluidic channel **201.** The light beam **214** may be collimated or substantially collimated by the light aperture **204,** at least for the path length of the light beam **214** through the microfluidic channel **201.** The light beam **214** may define a beam axis extending through the microfluidic channel **201.** The walls of the microfluidic channel **201** may be formed of a light transparent material, at least to the light **212** provided by the light source **202.**

The path of the light beam **214** intersecting with the microfluidic channel **201** defines the sensing area **216,** which may also be described as a sensing volume, in which the particles **210** may be detected. After the light beam **214** passes through the microfluidic channel **201,** the light beam **214** is received by the light detector **206,** which may be positioned outside of microfluidic channel **201.** When the particle **210** and fluid **208** are in the sensing area **216,** the light detector **206** may be used to determine an absorbance of the light beam **214** by the particle **210** and the fluid **208** to detect, size, or otherwise characterize the particle **210.**

As used herein, the term "path length" refers to the distance that light from the light source **202** travels in fluid to be measured. In some embodiments, the path length may be about equal to a width or depth of the microfluidic channel **201.** The path length may be small to improve sensitivity to the particles **210.** In some embodiments, the path length is less than or equal to 2000, 1000, 500, 300, 250, 200, 150, or 100 micrometers. In one or more embodiments, the path length is less than or equal to 1000 micrometers.

The light source **202** is configured to generate light in a selected frequency band such that the particle **210** has a different absorbance than the fluid **208** in the selected frequency band. In one or more embodiments, the particle **210** has a higher absorbance than the fluid **208,** for example, when the liquid is water and fluid **208** is a hydrocarbon fluid. In fuel system applications, for example, the light source **202** may generate the light **212** in at least the near infrared (NIR) frequency band. In some embodiments, the NIR light **212** may include an emission peak in, or at least include frequencies in, a range from 1400 to 1600 nanometers. In particular, the NIR light **212** may include an emission peak centered at or near 1550 nanometers. In some embodiments, the NIR light **212** may include an emission peak in, or at least include frequencies in, a range from least 900 to 1100 nanometers. In particular, the NIR light **212** may include an emission peak centered at or near 1000 nanometers.

The light source **202** may include any suitable type of light source capable of providing the light **212** in a selected frequency band. In some embodiments, the light source **202** is a light-emitting diode (LED). The LED light source **202** may be a low-power LED. In some embodiments, the LED light source emit omnidirectionally or in all directions from the light-emitting junction. In some embodiments, the LED light source emits primarily in one direction. In some embodiments, the light source **202** may be paired with or include a fiber optic cable that directs light to the microfluidic channel **201.** The light aperture **204** may be used to allow a narrow light beam **214** through the microfluidic channel **201,** which may facilitate eliminating noise or false signals, for example, due to scattering and reflectance.

The light aperture **204** may be or include at least one opening in the aperture element **218.** As used herein, "aperture" refers to the opening, or void, within the aperture element **218.** The light aperture **204** may have a width that is sized relative to the microfluidic channel **201** and the light detector **206** to facilitate optimal sensitivity for detecting the particles **210** in the fluid **208.** In some embodiments, a width of the light aperture **204** is the same or substantially the same as the channel width of the microfluidic channel **201.**

Additionally, or alternatively, the light aperture **204** may be sized relative to a predetermined particle size of interest. For example, in some embodiments, a width of the light aperture **204** may be designed to be less than or equal to 2, 3, 4, 5, 6, 7, 8, 9, or 10 times the particle size of interest. In some embodiments, a width of light aperture **204** may be designed to be greater than or equal to 1, 2, 3, 4, 5, 6, 7, 8, or 9 times the particle size of interest.

The light aperture **204** may have any suitable geometric shape. In some embodiments, the light aperture **204** has a round or circular shape, such as a circle or oval. In some embodiments, the light aperture **204** has a polygonal shape, such as a triangle, square, trapezoid, or rectangle. The light aperture **204** may have a length, which may extend along the same direction as the flow of the fluid **208.** In one or more embodiments, the length of the light aperture **204** may be the same or substantially the same as the width of the light aperture **204.**

### Light Detector

The light detector **206** may be any suitable type of photodetector sensitive to the selected frequency band, which may be an NIR frequency band. The light detector **206** is also configured to provide a signal representing an amount of light from the light beam **214** remaining after passing through the microfluidic channel **201.** In particular, the light detector **206** may be configured to generate an electrical signal, such as a current, voltage, or power signal, in response to receiving light in the selected frequency band. Non-limiting examples of types of photodetectors include indium-gallium-arsenide (InGaAs), germanium (Ge), or silicon (Si) photodiodes. For example, an InGaAs photodiode may be sensitive to the light **212** in a frequency band from 1100 to 1700 nanometers. A Ge photodiode may have a peak sensitivity at 1550 nanometers. A Si photodiode may be used for visible light.

### Controller

The controller **110** may be configured to detect, size, or otherwise characterize one or more particles **210** dispersed in the flow of fluid **208** based on the signal from light detector **206.** In some embodiments, the controller **110** may be configured to detect one particle **210** at a time dispersed in the flow of the fluid **208,** particularly particles of a predetermined size.

In general, when the particle **210** is a fluid, the particle may also be referred to as a droplet. When the particle **210** is a liquid, the signal may be used to determine an amount of liquid (e.g., water) per unit volume of the fluid **208** (e.g., hydrocarbon fluid) excluding liquid dissolved in the fluid.

In some embodiments, the controller **110** is configured to determine a particle rate through the sensing area **216.** For example, a change in absorbance detected based on the signal from the light detector **206** may indicate that the particle **210** is entering or is leaving the sensing area **216.** Alternatively, or additionally, the controller **110** may be configured to determine a particle size. In some embodiments, the controller **110** may determine a particle rate or a particle size based on at least one of: a magnitude of a pulse contained within the signal, a width of a pulse contained within the signal, a first threshold signal level for detecting a minimum size particle in the sensing area, a second threshold signal level for detecting a particle that fills the sensing area, and a threshold signal level crossing rate. When the particle is a fluid, the controller **110** may determine an amount of the particle **210** in droplet form per unit volume of fluid **208,** such as a particle concentration, based on particle rate, particle size, or both. In some applications, such as non-engine applications, when a particle rate is regular or substantially regular, the particle rate may be used to estimate or determine a particle size or concentration.

In some embodiments, the controller **110** is further configured to determine an amount of the particles **210** in droplet form per unit volume of the fluid **208** based on the droplet rate and droplet size. The controller **110** may also be configured to determine a particle size based on the magnitude of a pulse contained within the signal data in response to the signal not crossing the second threshold signal level. The controller **110** may further be configured to determine a particle size based on the width of a pulse contained within the signal data in response to the signal crossing the second threshold signal level. Further, the controller **110** may be configured to determine a particle size based on the particle rate.

**Capacitance-based sensor**

In other embodiments, a capacitance-based sensor (not shown) may be used as the particle sensor **112.** In order to detect single particles and assess fuel cleanliness, a capacitance sensor may be fabricated in the microfluidic channel **201,** for example, near the outlet. Capacitance sensors may be used to detect particles **210,** such as water or other liquid droplets or metal particles. The capacitance sensor may include interdigitated electrodes to form a flat capacitor. The capacitance of this channel may be calculated from:

$$C_{pair} = \frac{2\varepsilon_f \varepsilon_0 l}{\pi} ln\left[\left(1 + \frac{w}{a}\right) + \sqrt{\left(1 + \frac{w}{a}\right)^2 - 1}\right] \qquad (Eq.\ 4)$$

where $\varepsilon_f$ is the dielectric of the fluid in the microfluidic channel and *l, w,* and *a* are the geometric dimensions of the electrodes. When a particle passes through the microfluidic channel, the change in capacitance can be simplified to (approximately proportional to):

$$\Delta C \widetilde{\propto} \left(\varepsilon_p - \varepsilon_f\right) A_p \qquad (Eq.\ 5)$$

where $\varepsilon_p$ is the dielectric of the particle and $A_p$ is the area of the particle.

Capacitance sensors can be used to sense a variety of particles in a fluid, for example, when the dielectric difference between the particle material and the fluid is sufficient to produce a significant signal. Table 1 below shows the dielectric constant for various particles and fluids. Particle materials having a larger difference in dielectric constant from the background fluid may produce a larger signal difference. In general, the signal may also be related to the particle size in addition to the dielectric difference between the particle and background fluid. In the case that the size is known (or approximately known), which may be determined by using the particle separation element **302** (see **FIGS. 9-10),** the signal may be used to determine the dielectric constant difference, and perhaps the contaminant material.

*Table 1*

| Contaminant/Fluid | Dielectric Constant |
|---|---|
| Oil | ~3 |
| Water | 80 |
| Fuel | ~2.1 |
| Polyethylene | 2.25 |
| Metals | Very High |

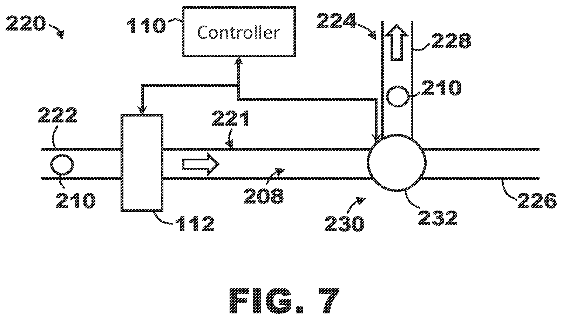

**FIG. 7** is a conceptual diagram showing one example of an arrangement **220** for using the particle sensor **112** relative to a microfluidic channel **221.** The microfluidic channel **221** may include an inlet **222** and an outlet **224** having at least a first flow branch **226** and a second flow branch **228.**

The flow of fluid **208** and the particles **210** in the flow of the fluid may be received at the inlet **222.** Any particles **210** may be detected by the particle sensor **112** positioned along the microfluidic channel **221** to provide signal data representing a signal corresponding to the fluid **208** and the particles **210** dispersed in the fluid. The controller **110** may be operably coupled to the particle sensor **112** to receive an indication that particles **210** have been detected.

The controller **110** may be operably coupled to a flow routing element **230** positioned along at least one flow branch **226, 228** of the outlet **224**. In the illustrated embodiment, the flow routing element **230** includes a single valve **232** positioned between the first flow branch **226** and the second flow branch **228** to selectively divert fluid flow to one branch or the other branch. The controller **110** may be configured to control the flow routing element to direct fluid flow to the first flow branch **226,** for example, until a threshold level of particles **210** is detected by the particle sensor **112** in the microfluidic channel **221**. The controller **110** may also be configured to determine whether a threshold level of the particles **210** is present in the microfluidic channel **221** based on the signal data from the particle sensor **112**. In response to determining that the threshold level of particles **210** is present in the microfluidic channel **221,** the controller **110** may control the flow routing element **230** to direct fluid flow to the second flow branch **228**.

The threshold level of particles **210** may be determined in any suitable manner. Non-limiting examples include detecting one or more particles above a threshold size, detecting a number of particles exceeding a threshold number, detecting a threshold rate (or frequency) of particles, or detecting a threshold concentration of particles in fluid.

The controller **110** may also determine a flow rate of the fluid **208** in the microfluidic channel **221**. The flow rate may be used to determining an appropriate timing of when to control the fluid routing element **230** to direct fluid to the second flow branch **228** and a duration to control the fluid routing element to direct fluid back to the first flow branch **226**.

The flow routing element **230** may include one, two, or more valves **232,** solenoids, any other suitable mechanisms for diverting the flow of the fluid **208**. In some embodiments (not shown), the flow routing element **230** includes two valves **232** each positioned along one of the flow branches **226, 228**. The valves **232** may be alternatingly opened or closed to allow the fluid **208** to flow through the first flow branch **226** or the second flow branch **228**.

**Water drop removal**

In some embodiments, the arrangement **220** may be described as a water drop removal system or microfluidic water drop diverter system, which may be used for the removal of water drops, such as particle **210,** from a hydrocarbon fluid. The diverter system may include a microfluidic drop diverter, or flow routing element **230,** and the particle sensor **112** (for example, optical or capacitance types) that can detect individual water drops in the microfluidic channel **221**. In the case that the microfluidic channel **221** contains a water drop the fluid may be diverted to a waste stream, such as second flow branch **228,** via a valve switch or other mechanism, such as valve **232**. The waste stream may be sent to a waste collection area, sent to a water removal filter (such as a barrier or coalescing filter), or returned to the main fuel tank. The time the fluid is diverted may be determined from the microfluidic channel geometry (such as dimensions and length between the sensor and diverter valve) and the flowrate. After the water drop is sent into the waste stream, the diverter valve may be switched such that the fluid is sent to the main outlet, such as first flow branch **226**. The main outlet is considered clean (such as fuel without water drops) and may be sent to a particle removal filter, high pressure common rail system, or another part of the fuel system.

In another configuration, the microfluidic water drop diverter may include two valves. One valve may be in the main outlet channel, such as first flow branch **226,** and the other may be in the waste outlet channel, or second flow branch **228.** The valves may be close to the junction where the inlet flow channel, waste outlet channel, and main outlet channel meet, and thus incorporated into a microfluidic device. Alternatively, the valves may be away from the junction and independent of the microfluidic device (for example, in the tubing or piping leaving the device). When a water drop is sensed by the water drop sensor, the main outlet valve may close, and the waste outlet valve may open.

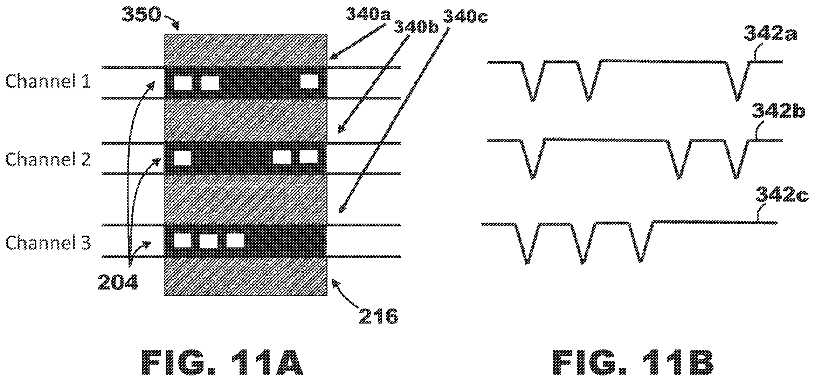

The diverter system may contain more than one microfluidic channel to increase total throughput. Multiple channels may or may not share the same particle sensor **112.** The channel which contains the water drop maybe detected by having the sensor output be specific to that channel (see **FIGS. 11A-B**).

The diverter system could also be used with a fuel system with two coalescing elements in parallel. When the water sensor positioned downstream of the first coalescing elements detects water, one or more valves may switch flow from the first coalescing element to the second coalescing element. This may allow drivers to switch filters at a longer interval or at a more convenient time.

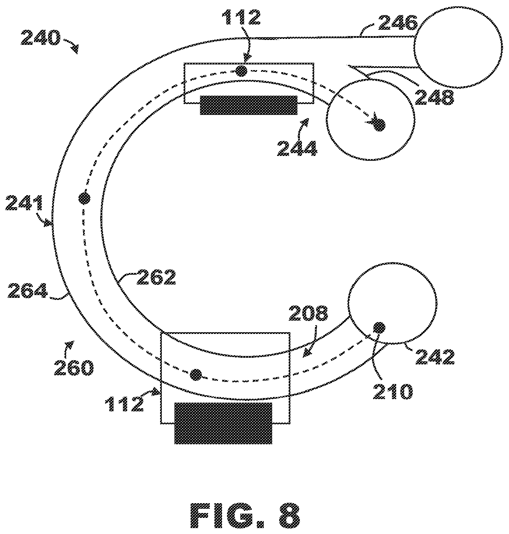

**FIG. 8** is a conceptual diagram showing another example of an arrangement **240** for using the particle sensor **112** relative to a microfluidic channel **241** of a hydrodynamic separator **260,** which may be described as a microfluidic separation channel. The microfluidic channel **241** may include an inlet **242** and an outlet **244** having at least a first flow branch **246** and a second flow branch **248**. As illustrated, the microfluidic channel **241** of the hydrodynamic separator **260** is curved. The curve may follow a circular shape. In other embodiments, the microfluidic channel **241** may be curved and have a multiple-S shape. Any suitable curved shape may be used to provide sufficient inertial forces to focus particles in a particular size range at a particular flow rate. The inlet **242** may be positioned on one end, or end region, and the outlet **244** may be positioned on an opposite end, or end region.

The hydrodynamic separator **260** may be designed such that, at a predetermined flow rate of fluid **208,** the microfluidic channel **241** is configured to direct any particles **210** exceeding a corresponding threshold size into the second flow branch **248** and any remaining particles into both the first flow branch **246** and the second flow branch **248** of the outlet **224.**

The flow of fluid **208** and the particles **210** in the flow of the fluid may be received at the inlet **242.** Any particles **210** may be detected by the particle sensor **112** positioned along the microfluidic channel **241** to provide signal data representing a signal corresponding to the fluid **208** and the particles **210** dispersed in the fluid. The controller **110** **(FIG. 1)** may be operably coupled to the particle sensor **112** to receive an indication that particles **210** have been detected.

The controller **110** may be operably coupled to the fluid pump **114 (FIG. 1)** in fluid communication with the microfluidic channel **241** of the hydrodynamic separator **260.** The fluid pump **114** may be configured to direct fluid through the microfluidic channels **241** of one or more hydrodynamic separators **260.** The controller **110** may be configured to control the fluid pump to direct fluid through the hydrodynamic separation element from the inlet **242** to the outlet **244.** The controller **110** may also be configured to determine whether a threshold level of the particles **210** is present in the microfluidic channel **241** based on the signal data from the particle sensor **112.** In response to determining that the threshold level of particles **210** is present in the microfluidic channel **241,** the controller **110** may control the fluid pump **114** to direct fluid at the predetermined flow rate of the fluid **208** through the microfluidic channel of the hydrodynamic separator **260** to focus any particles exceeding the corresponding threshold size to the second flow branch **248.**

The particle sensor **112a, b** may be positioned in any suitable location along the microfluidic channel **241.** In some embodiments, the particle sensor **112a, b** may be positioned between the inlet **242** and the outlet **244.** In some embodiments, the particle sensor **112a** may be positioned closer to the inlet **242.** Closer to the inlet **242,** the particles **210** above the threshold size may not be focused along an inner wall **262** of the hydrodynamic separator **260.** The particle sensor **112a** may define a sensing area (illustrated schematically in solid line) that covers most or all of the width of the microfluidic channel **241** from the inner wall **262** to an outer wall **264.** Closer to the outlet **244,** the particles **210** above the threshold size may be focused along the inner wall **262** of the hydrodynamic separator **260.** A particle sensor **112b** positioned towards the outlet 244 may define a sensing area (illustrated schematically in solid line) that covers some or less than half of the width of the microfluidic channel **241** from the inner wall **262** to the outer wall **264.**

In general, when a droplet is sensed, the arrangement **240** may change the fluid flow to focus the droplet into the waste stream. The flow may be calibrated to remove specific sized droplets or particles based on sizing information from the particle sensor **112a, b.** The flow could be changed with a pressure pulse, dip, or changes to the flow paths (such as opening or changing a valve position of one or more valves positioned at the outlet **244).**

In some embodiments, the waste stream, such as the second flow branch **248,** may be only a fraction of the size of the overall flow stream. This may minimize the impact to the overall flow stream when removing the droplets.

**FIGS. 9-10** are conceptual diagrams showing another arrangement **300** for using the particle sensor **112** with a particle separation element **302** and the microfluidic sensing element **116.** The arrangement **300** may be used to sort the particles **210** and to calculate a number of particles within different size ranges. Although a two-stage separation element **302** is shown to separate particles into three size ranges, any suitable number of stages (*n*) may be used to separate particles into different size ranges (*n+1 size ranges).*

In the illustrated embodiment, the particle separation element **302** is configured to sort the particles **210** in a first size range, a second size range, and a third size range into a first outlet flow **304** (containing particles in the first size range, second size range, and third size range), a second outlet flow **306** (containing particles in the second size range and third size range), and a third outlet flow **308** (containing particles in the third size range) for sensing by the microfluidic sensing element **116.** The particle sensor **112** may be positioned along the microfluidic sensing element **116** to detect the number of particles in each outlet flow **304, 306, 308.** The controller **110 (FIG. 1)** may determine a number of the particles associated with each size range based on volume fractions associated with the flow branches of the particle separation element **302.**

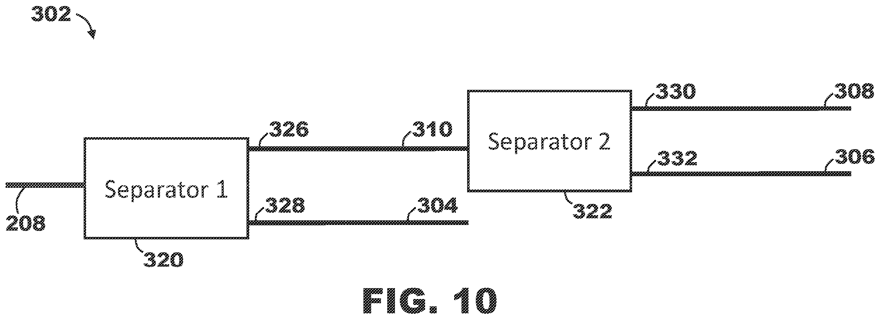

As can be seen in **FIG. 10,** the particle separation element **302** may include at least a first hydrodynamic separator **320** and a second hydrodynamic separator **322.** Each hydrodynamic separator **320, 322** may define a curved microfluidic channel to separate particles of different size changes, which may be described as a microfluidic separation channel. The outlet of the first hydrodynamic separator **320** may include a first flow branch **326** and a second flow branch **328.** The outlet of the second hydrodynamic separator **322** may include a first flow branch **330** and a second flow branch **332.**

The second flow branch **328** of the first hydrodynamic separator **320** may be configured to provide the first outlet flow **304.** The second flow branch **332** of the second hydrodynamic separator **322** may be configured to provide the second outlet flow **306.** The first flow branch **330** of the second hydrodynamic separator **322** may be configured to provide the third outlet flow **308.** The first flow branch **326** of the first hydrodynamic separator **320** may be in fluid communication, or fluidly coupled to, the inlet of the second hydrodynamic separator **322** to provide a fourth fluid flow **310.**

The first hydrodynamic separator **320** may be configured to focus all particles in the first size range into the second flow branch **328.** The first size range may include any particles exceeding a first threshold size. Any remaining particles that do not exceed the first threshold size may be provided to both the first flow branch **326** and the second flow branch **328.** The remaining particles may be considered uniformly distributed. The ratio of remaining particles provided to each branch **326, 328** may be determined based on the volume fractions associated with each branch **326, 328.** In general, the first flow branch **326** may receive a first portion, and the second flow branch **328** may receive a second portion of any remaining particles that do not exceed the first threshold size. As can be seen in **FIG. 9,** the first outlet flow **304** from the second branch **328** includes particles in every size range. None of the other outlet flows **306, 308** contain particles that exceed the first threshold size.

The second hydrodynamic separator **322** may receive the flow from the first branch **326** including the second portion of any remaining particles that do not exceed the first threshold size. The second hydrodynamic separator **322** may be configured to focus all particles in the second size range into the second flow branch **332.** The second size range may include any particles exceeding a second threshold size. Any remaining particles that do not exceed the second threshold size may be provided to both the first flow branch **330** and the second flow branch **332,** which may be only particles in the third size range. The remaining particles may be considered to be uniformly distributed. The ratio of remaining particles provided to each branch **330, 332** may be determined based on the volume fractions associated with each branch **330, 332.** In general, the first flow branch **330** may receive a first portion, and the second flow branch **332** may receive a second portion of any remaining particles that do not exceed the second threshold size. As can be seen in **FIG. 9,** the second outlet flow **306** includes particles both particle size ranges that do not exceed the first threshold size, and the third outlet flow **308** includes only particles that do not exceed the second threshold size.

The microfluidic sensing element **116** may be in fluid communication with the particle separation element **302.** The microfluidic sensing element **116** may include a plurality of microfluidic channels **340,** which may be described as microfluidic sensing channels, each in fluid communication with a different flow branch of the particle separation element **302.** The microfluidic channels **340** may be arranged in parallel. In particular, each microfluidic channel **340** receives a different outlet flow **304, 306, 308.** The particle sensor **112** may be positioned and configured to detect the number of particles flowing through each of the microfluidic channels **340.**

The controller **110** may determine the number of particles in each size range by counting the number of particles of any size range in each outlet flow **304, 306, 308** in the microfluidic channels **340.** For illustrative purposes, assuming that the volume fraction between each pair of flow branches is 1: 1 and the number of remaining particles (the number of particles that do not exceed the particle threshold size) is divided evenly between the two branches, the number of particles in each outlet flow may be calculated as follows:

$$\begin{cases} n_1(d > d_1) = c_1 - (c_2 + c_3) \\ n_2(d_1 \geq d > d_2) = 2(c_2 - c_3) \qquad \textit{(Eqs. 6A, 6B, 6C)} \\ n_3(d \leq d_2) = 4c_3 \end{cases}$$

where $n_1$ is the first size range, $n_2$ is the second size range, $n_3$ is the third size range, $d_1$ is the first threshold size, $d_2$ is the second threshold size, $c_1$ is the number of particles counted in the first outlet flow **304,** $c_2$ is the number of particles counted in the second outlet flow **306,** and $c_3$ is the number of particles counted in the third outlet flow **308.**

In general, the inlet of the particle separation element **302** may receive a random distribution of the particles **210.** The particle separation element **302** may sort the particles **210** into different outlet flows **304, 306, 308.** The outlet flows **304, 306, 308** may be received by a microfluidic sensing element **116.** The particle sensor **112** may count the number of particles in each microfluidic channel **340** of the microfluidic sensing element **116** and determine the number of particles in each size range.

In some embodiments, the particle sensor **112** may include a detector aligned to each microfluidic channel **340** to count the number of particles in each channel. In other embodiments, the particle sensor **112** may use a shared detector across multiple channels to count the number of particles in each channel.

The arrangement **300** may be described as a microfluidic particle sensor, which may be used to measure fluid cleanliness level in liquid applications. In one example, the microfluidic particle sensor may be used in diesel fuel filtration systems to measure fluid cleanliness. The sensor may be placed upstream of a filter, downstream of a filter, or as a bypass to a filter. The sensor may include a segmentation stage, or particle separation element **302,** that divides the particles into streamlines, for example, based on ISO cleanliness codes, which may include particles from 4 to 6 micrometers in a first stream, particles from 6 to 14 micrometers in a second stream, and particles greater than 14 micrometers in a third stream. Particle sizes under 4 micrometers may not be counted, or an additional stage may be added (equal four stages) to capture particles under 4 micrometers, from 4 to 6 micrometers, from 6 to 14 micrometers, and greater than 14 micrometers. The microfluidic particle sensor may also be used in hydraulic or lube applications.

The sensor may be described as having two stages. The first stage may be described as a "segregator stage," such as the particle separation element **302,** which focuses particles into specific streamlines based on the particle size. The second stage may be described as a "sensing stage" including multiple sensing channels, such as microfluidic sensing element **116,** in which specific particulate containing streamlines are sent into different channels. Each individual channel has a particle sensor or particle counter. The design of the segregator stage may dictate which particle size range goes into each channel. By counting or otherwise detecting particles in a sensing channel a particle size distribution may be determined.

Once particles have been focused into streamlines based on their particle size, the streamlines may be sent into different sensing channels, such as microfluidic channels **340.** Each sensing channel corresponds to a particle size range (based on the design and performance of the segregator stage). Each sensing channel may be associated with a particle sensor. The particle sensor may detect, or count, the passage of a particle in the sensing channel. The particle sensor may be optical (using light absorbance, fluorescence, scattering, or other optical methods), electronic (using capacitance sensor or impedance sensor), or magnetic. The sensing channels may share a single particle sensor when the signal output from each channel is unique.

Such a microfluidic particle sensor using a passive particle focusing scheme upstream of particle counters may not require calibration as the particles are counted. This may allow for ease of manufacturing. The microfluidic particle sensor may also be designed to work over a range of different types of particles that have different properties, such as electronic or magnetic properties. The microfluidic particle sensor may also count individual particles one-by-one, instead of a bulk fluid reading, which may lead to increased sensitivity. The use of microfluidic channels may also minimize the effect of the background or carrier fluid.

**FIGS. 11A-B** are conceptual diagrams showing one example of a technique for counting the number of particles in multiple microfluidic channels **340a, 340b, 340c** using a shared light detector, such as light detector **206 (FIG. 6).** An aperture element **350** may be similar to the aperture element **218 (FIG. 6)** except that the aperture element **350** includes a plurality of apertures **204** aligned to each microfluidic channel **340a, 340b, 340c.** Each set of apertures **204** may define a unique spacing pattern along the corresponding microfluidic sensing channel **340a, 340b, 340c.** The unique spacing patterns may also be described as a unique orifice pattern.

The controller **110** (see **FIG. 6**) may be configured to determine signal data based on the signal from the light detector **206** and determine whether a particle has passed through the sensing area **216** based on the signal data. The controller **110** may determine the unique spacing pattern associated with the particle passed through the sensing area **216** based on the signal data. In particular, a particle passing through microfluidic sensing channel **340a** may provide first unique signal data **342a,** a particle passing through microfluidic sensing channel **340b** may provide second unique signal data **342b,** and a particle passing through microfluidic sensing channel **340c** may provide third unique signal data **342c.** Signal processing or pattern recognition processing by the controller **110** may be configured to distinguish these unique patterns to identify the corresponding microfluidic sensing channel **340a, 340b, 340c** and the number of particles in the corresponding microfluidic sensing channel.

In general, the unique spacing patterns provide different time profiles for a drop moving through a particular microfluidic sensing channel **340a, 340b, 340c.** In the illustrated embodiments, a series of holes are placed at different distances to each other, such that a drop moving through the channel will give several signal dips and the temporal pattern of the dips is specific to the channel. A unique signal may also be created with an orifice pattern that gives a different signal profile (such as different shaped orifice holes). Unique spacing and unique shapes may also be used together. In the case that multiple drops are present in the channels, signal deconvolution algorithms may be used to distinguish individual channels.

In some embodiments, a diffraction grating may also be used to control the light entering the channels. The diffraction grating may be in the channel or enclosed in the channel and direct the optical path towards a specific detector in an array of detectors.

While the present disclosure is not so limited, an appreciation of various aspects of the disclosure will be gained through a discussion of the specific examples and illustrative embodiments provided below, which provide particle separation to supplement or replace filters. Various modifications of the examples and illustrative embodiments, as well as additional embodiments of the disclosure, will become apparent herein.

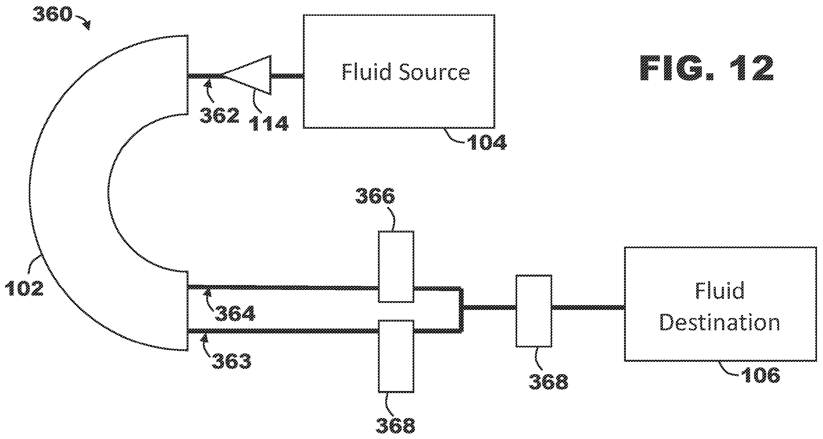

**FIG. 12** is a conceptual diagram showing one example of a fluid system **360** that may be used to remove particles using the particle separation element **102.** The particle separation element **102,** which may include a hydrodynamic separator element, may be used on a fluid system **360** along a main flow line **362.**

As illustrated, the fluid pump **114** may be used to provide a fluid flow from the fluid source **104** through the particle separation element **102** to the main flow line **362.** The particle separation element **102** may provide a main outlet flow using the first flow branch **363** and a secondary outlet flow using the second flow branch **364.** The first flow branch **363** and the second flow branch **364** may be recombined along the main flow line **362** upstream of the fluid destination **106,** which may include the rest of the system **360.**

The secondary outlet flow may be provided to a filter **366** along the second flow branch **364** upstream of recombination with the main outlet flow. Optional filters **368** may be positioned, for example, along the first flow branch **363** upstream of recombination or along the main flow line **362** downstream of recombination.

The particle separation element **102** may be positioned upstream or downstream of the fluid pump **114.** In the illustrated embodiment, the particle separation element **102** is positioned downstream of the fluid pump **114.**

The particle separation element **102** may be configured to remove particles greater than a particular threshold size in diameter from the main flow line **362** while the fluid pump **114** provides fluid at a particular flow rate.

The separator element **102** can be used to focus particles above a particular threshold size into a portion of the total fluid flow. The concentrated particle stream may be focused, or directed, into the secondary outlet flow along the second branch **364,** which may be provided to the filter **366,** which may be described as a dead-end filter, to remove particles. After going through the filter **366,** fluid from the concentrated particle stream from the second flow branch **364** may be combined with the remainder of the fluid from the first flow branch **363** and delivered to the rest of the system shown as the fluid destination **106**. Particles above the critical size may be largely removed from the overall fluid provided to the fluid destination **106**.

In the system **360,** only a portion of the total fluid flow is filtered through the filter **366**. In some embodiments, the concentrated particle stream provided to the second flow branch **364** may include less than 50% of the total fluid volume, less than 25% of the total fluid volume, or less than 10% of the total fluid volume. The flow rate through the filter **366** may be lower than, for example, in systems where the particle separation element **102** were not used. The lower flow rate may lead to a lower filter pressure drop, longer filter life, or both.

Additional filters **368** may be used to remove particles below the critical size, for example, along the "clean stream" line along the first flow branch **363,** or along the main flow line **362,** after the fluid streamlines combine. A flow metering, or variable pressure object, in the clean stream along the first flow branch **363,** may be used to balance flow appropriately between the two streams exiting the separator element **102**.

The technique of coupling the separator element **102** to a filter may be used in a number of applications, such as engine fuel, engine oil, engine hydraulic, and stationary hydraulic. This technique may be particularly useful in engine oil, engine hydraulic, or stationary hydraulic, where the fluid is re-circulated through the filter system.

EXAMPLES

Device Fabrication

In Example 1, hydrodynamic separators were fabricated as microfluidic devices from polydimethylsiloxane (PDMS) using standard soft photolithography techniques. In brief, a photomask was prepared using DraftSight and printed at 20,000 dpi (CAD/Art Services, Inc.; Brandon, Oregon). The SU-8 mold was prepared using SU-8 2100 photoresist (MicroChem, Inc.; Newton, MA). Process parameters are described on the SU-8 2100 datasheet provided by MicroChem. PDMS (Sylguard 184; Dow Corning; 10: 1 w/w base: curing agent) was poured over the mold, degassed for 30 minutes, and cured in an oven overnight at 85 °C. After removing the PDMS from the wafer, inlet and outlet holes were punched with biopsy needles. Scotch tape was used to remove particles and fibers from the PDMS. The final device was prepared by plasma bonding the PDMS to a glass slide using a Harrick Plasma cleaner at 800 micron (mtorr) for 1 minute. The finished device was placed on a hotplate at about 100 °C for 15 minutes. Devices were designed with a constant radius of curvature, channel width, and channel depth.

Particle Imaging

In Example 2, fluorescent particles were suspended in de-ionized water for testing (Table 1). The 2, 10, and 20 micrometer ($\mu$m) particles were provided in an aqueous suspension. These samples were diluted and tested directly.

The 25 $\mu$m and 30 $\mu$m particles were provided as a powder. These samples were added with sodium dodecyl sulfate surfactant (SDS) to de-ionized water to prepare the testing solution.

A typical mixture contained 50 mg of particles, 100 mg of SDS, and 500 mL of de-ionized water. Particle size distributions were confirmed with a laser diffraction particle sizer (Beckman-Coulter LS-320).

Particles were fed to hydrodynamic separators, made according to Example 1, using a pressure driven flow system (ElveFlow OB1-Mk3; Elvesys; Paris, France). The system contained an in-line flowmeter to measure the flow in real time (Elveflow FS4 (0 - 1 mL/min) or FS5 (0.2 - 5 mL/min); Elvesys; Paris, France). The flow was controllable by pressure or by flowrate within the ESI Software package.

Particle focusing within the hydrodynamic separators was measured optically using an Olympus IX-73 inverted microscope (Olympus Life Science; Waltham, MA) coupled with a mercury vapor short arc lamp (U-HGLGPS, Olympus Life Science; Waltham, MA). A fluorescence filter cube was selected to match the absorbance and emission characteristics of the fluorescent particles. Images were taken with a 10x objective. Images were captured using a Prime BSI sCMOS camera (Teledyne Photometrics; Tuscan, AZ) using MicroManager (version 1.4; https://micro-manager.org/wiki/Micro-Manager).

*Table 2: Fluorescent Particle Properties*

| Particle Size (μm) | Source | Part Number | Particle Optical Properties | |
|---|---|---|---|---|
| | | | $\lambda_{ex}$ (nm) | $\lambda_{em}$ (nm) |
| 2 | SigmaAldrich | L3030 | 553 | 635 |
| 10 | Polysciences, Inc. | 18140-2 | 441 | 485 |
| 20 | Polysciences, Inc. | 19096-2 | 441 | 485 |
| 25 | Cospheric LLC | UVPMS-BR-0.995 22-27μm | 300 - 550 | 605 |
| 30 | Cospheric LLC | UVPMS-BR-1.090 27-32μm | 300 - 550 | 605 |

Prior to injecting particles, a pressure-flow calibration was determined for each hydrodynamic separator using de-ionized (DI) water, to calibrate for unreliable flowmeter readings for particle containing solutions. The data was fit to a second order polynomial and used to determine operating pressures for desired experimental flowrates.

During particle experiments the system pressure was controlled, and the pressure-flow data was recorded. If the pressure-flow data showed decay over the experimental timeframe, an assumption was made that particles were collecting somewhere in the device and the data was not recorded.

After the experiment, the device was cut in half and the channel depth was measured optically on the Keyence VHX Digital Microscope (Keyence; Itasca, IL).

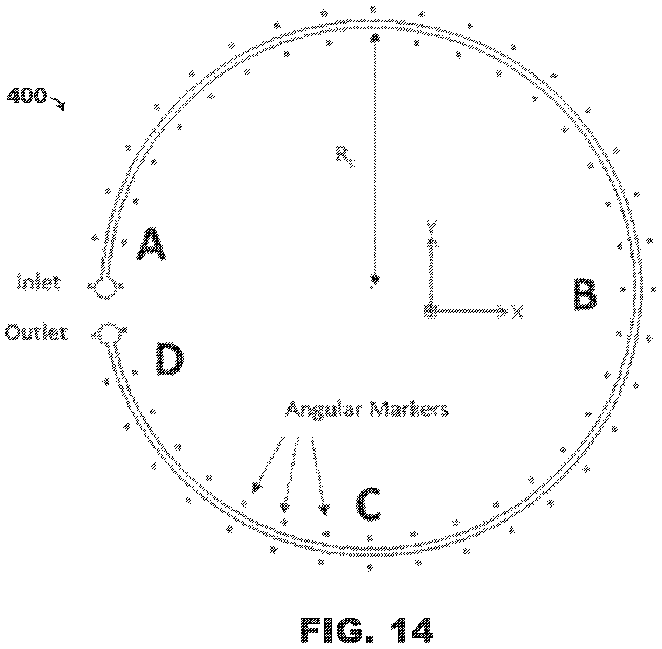

Once the pressure-flow relationship of a device was calibrated, an experiment was run at a constant Dean Number, or flow rate, with a single fluorescent particle solution. Fluorescence images were taken at various angles through the device to measure particle focusing as a function of length (L = $\alpha R_c$, where $\alpha$ is the angle through the device in radians and R is the radius of curvature measured at the inside wall). The angles were defined around the circular shape of each hydrodynamic separator, for example, as shown in **FIG. 14. FIG. 14** is a conceptual diagram showing relative positions of angles around a hydrodynamic separator **400** at the inlet 10° (A), 180° (B), 270° (C), and outlet 350° (D). The cMOS camera integration time was set to maximize signal differences without saturating any pixels.

The extent of particle focusing was determined using image analysis in ImageJ open source software. Pixel intensity was measured across the channel at each imaged location of the device. The pixel intensity is assumed to be proportional to average particle concentration. The location of particle focusing was determined from the outlet image (340° or 350°). For each image, the percent focusing was determined as the ratio of the integrated pixel intensity in the focused region to the integrated pixel intensity of the entire channel as follows:

$$F\% = \frac{\int_{Focused} I(x)}{\int_{Channel} I(x)} \qquad (Eq.\ 7)$$

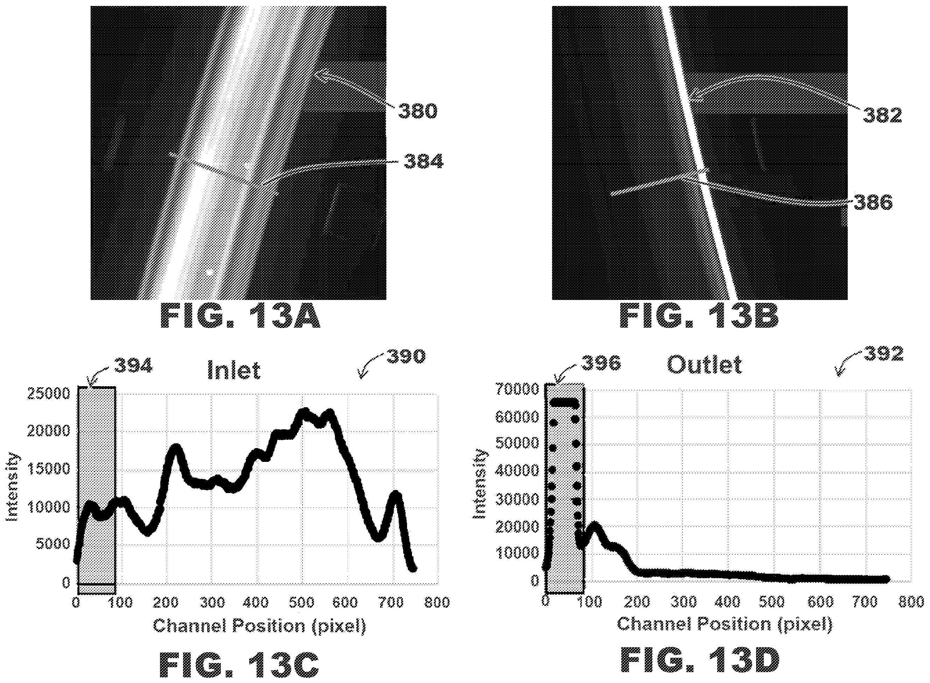

**FIG. 13A** shows a representative image from the device inlet **380** at 10 degrees. **FIG. 13B** shows a representative image from the device outlet **382** at 350 degrees. **FIG. 13C** is a plot **390** of pixel intensity versus channel position (in pixels) across the channel noted by the line **384 in FIG. 13A. FIG. 13D** is a plot **392** of pixel intensity versus channel position (in pixels) across the channel noted by the line **386 in FIG. 13B.** The boxes **394, 396** were considered the focused regions.

Focusing Studies: Same Device, Different Dean Number (140μm Depth: 25 μm Particles)

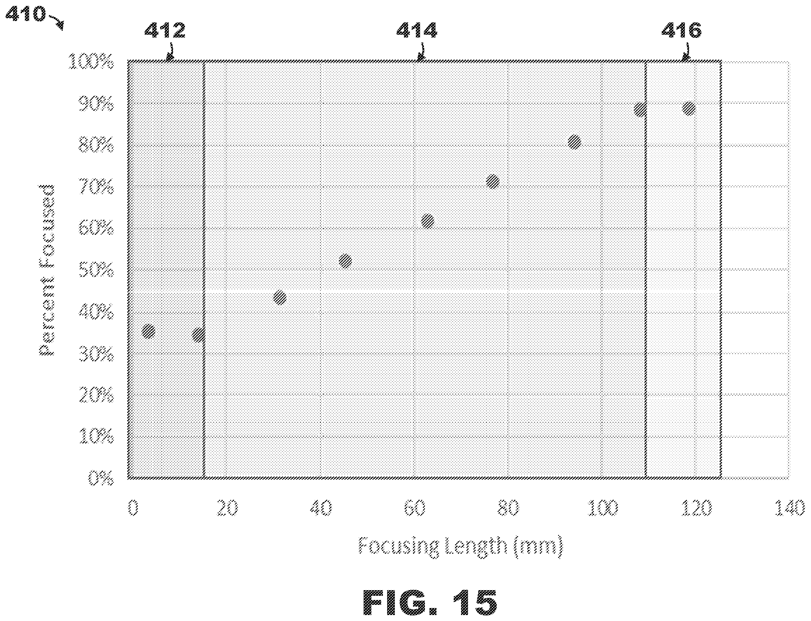

In Example 3, 25 μm particles were focused in a hydrodynamic separator (channel width: 500 μm, channel depth: 140 μm, radius of curvature: 20 mm) at two Dean numbers. A plot **410** showing the percent focused versus channel length data is shown in **FIG. 15** for the Dean Number of 15 at 1010 mbar of pressure (3.97 mL/min). The plot **410** shows three distinct regions: an initial region **412** where particles are not being focused, a region **414** where particles are focused, and a region **416** where particles have become fully focused.

At the device inlet, the particles are about 35% focused. The amount of focusing does not increase for the first 14 mm of channel length, which may be due to particle migration from the center of the channel to the edges of the channel due to shear-lift forces. This region **412** of the device may be described as the particle migration region and has a length $L_0$. This length may depend on particle size, fluid properties, and flow rate.

After the particle migration region, the percent of particles that are focused may increase linearly with respect to channel length. This region **414** of the device may be described as the linear focusing region. The slope of the linear fit may be described as the linear focusing rate ($r_f$). The percent of particles focused generally increases linearly until a maximum value.

Once the maximum value of particle focusing is reached, the particle focusing may stay approximately constant. This region **416** of the device may be described as the fully focused region. In this example, the maximum focusing percentage ($f_m$) in the fully focused region shows is about 90% (that is, 90% of the particles are focused).

The length of the hydrodynamic separator that may be used to reach a target focusing percentage may be described as:

$$L_D = L_0 + \frac{f_t - f_0}{r_f} \qquad (Eq. 8)$$

where $L_D$ is the hydrodynamic separator channel length required to reach the target focusing percentage, $L_0$ is the length of the particle migration region, $r_f$ is the linear focusing rate, $f_0$ is the particle focusing percentage at the inlet (and during the particle migration region **414),** and $f_t$ is the target focusing percentage. This equation may be used particularly when $f_0 < f_t < f_m$.

Table 3 shows data for focusing experiments with the same device run at different Dean Numbers. The length of the particle migration region and the length required to reach 90% focusing are similar and nearly identical.

*Table 3: Focusing Data for Experiments with Same Device, Different Dean Number*

| Dean Number | Length of Particle Migration Region - $L_0$ (mm) | Linear Focusing Rate - $r_f$ (%focused/mm) | Length Required to Reach 90% focusing - $L_D$ (mm) |
|---|---|---|---|
| 10 | 14 | 0.57% | 110 |
| 15 | 14 | 0.58% | 108 |

Experiments with Same Dean Number, Different Device (104μm Depth: 30μm Particles)

In Example 4, a similar experiment to Example 3 was run with approximately the same Dean Numbers but on devices with two different radii of curvatures. 30μm particles were used. The results from the experiment are shown in Table 4. The length of the particle migration region was shorter for the device with the smaller radius of curvature. In addition, the linear focusing rate was higher for the device with the smaller radius of curvature. Based on these results, the length required to focus particles to 50%, for example, was shorter for the device with the smaller radius of curvature.

*Table 4: Focusing Data for Experiments with Same Dean Number, Different Device*

| Radius of Curvature - Rc (mm) | Dean Number | Length of Particle Migration Region - $L_0$ (mm) | Linear Focusing Rate - $r_f$ (% focused/mm) | Length Required to Reach 50% Focusing - $L_D$ (mm) | Approximate Pressure Drop Required to Reach 50% Focusing - $P_D$ (mbar) |
|---|---|---|---|---|---|
| 10 | 21 | 5 | 0.91% | 35 | 600 |
| 20 | 23 | 10 | 0.58% | 75 | 1500 |

In general, the device with the smaller radius of curvature may achieve a target Dean Number with a lower flowrate than a device with a larger radius of curvature. When comparing the pressure drop required to focus particles, a smaller radius of curvature may result in a shorter channel and a lower flowrate, which may have a large impact on pressure drop.

As an example, from the data in Table 4 and the applied experimental pressures, the pressure drop associated with a hydrodynamic separator designed to focus 50% of the particles was calculated from the following equation:

$$P_D = P_{app} \frac{L_D}{R_C} \frac{360°}{350° * 2\pi} \qquad (Eq. 9)$$

where $P_{app}$ is the experimentally applied pressure, $L_D$ is the length required to reach 50% focusing (Table 4), $R_c$ is the device radius of curvature (Table 4), and the term $\frac{360°}{350° * 2\pi}$ accounts for the experimental device design in which the device only covered 350° of circle arc-length to allow for inlet and outlet ports. The calculated pressure drops are shown in Table 4. The device with a smaller radius of curvature was used to focus particles at a much lower pressure drop.

Length of Linear Focusing Region

It has recently been discovered that the length of the linear focusing region required to achieve maximum particle focusing (85%-95% particle focusing) may be described by the following relation:

$$L_f \propto \frac{Re}{De^2}\frac{w^2}{D_H} = \frac{2R_c}{Re}\left(\frac{w}{D_H}\right)^2 \qquad (Eq.\ 10)$$

where Re is the Reynolds Number, De is the Dean Number, and $D_H$ is the hydraulic diameter of the hydrodynamic separator, w is the channel width, and $R_c$ is the radius of curvature of the hydrodynamic separator. More specifically, the relationship is the following:

$$L_f = 156.2\frac{R_c}{Re}\left(\frac{w}{D_H}\right)^2 + 24.3 \qquad (Eq.\ 11)$$

Furthermore the length of the linear focusing region required to achieve maximum particle focusing for a specific particle size may be described by the following relation:

$$L_f = 1598.8\frac{R_c a w^2}{Re D_H^3} + 6.4 \qquad (Eq.\ 12)$$

Where a is the particle diameter. Particle diameter can be the equivalent spherical diameter for particles having a sphericity greater than 0.5. This equation can be a predictor of the length of the linear focusing region for particles having a diameter greater than 8% of the channel hydraulic diameter and less than or equal to 50% of the channel height.

The total length for a hydrodynamic separator may be determined or calculated to be:

$$L_D = L_0 + L_f \qquad (Eq.\ 13)$$

This equation may be used to calculate the minimum hydrodynamic separator channel lengths necessary to achieve maximum particle focusing for various applications. Experimental results demonstrate that the length of the particle migration region $L_0$ ranges from 0% to 29% of the total length of the hydrodynamic separator $L_D$ necessary to achieve maximum particle focusing. Further, data shows that the length of the particle migration region $L_0$ ranges from 0% to 40% of the length of the linear focusing region $L_f$. As such, the hydrodynamic separator channel length $L_D$ may be greater than or equal to the length of the length of the linear focusing region $L_f$ to achieve maximum particle focusing. The hydrodynamic separator channel length $L_D$ may be no greater than 40% more than the length of the linear focusing region $L_f$ to achieve particle focusing that is balanced with minimizing the pressure drop across the channel.

Thus, various embodiments of systems and methods for separating particles in hydrocarbon fluids are disclosed. Although reference is made herein to the accompanying set of drawings that form part of this disclosure, one of at least ordinary skill in the art will appreciate that various adaptations and modifications of the embodiments described herein are within, or do not depart from, the scope of this disclosure. For example, aspects of the embodiments described herein may be combined in a variety of ways with each other. Therefore, it is to be understood that, within the scope of the appended claims, the claimed invention may be practiced other than as explicitly described herein.

All scientific and technical terms used herein have meanings commonly used in the art unless otherwise specified. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims may be understood as being modified either by the term "exactly" or "about." Accordingly, unless indicated to the contrary, the numerical parameters set forth in the foregoing specification and attached claims are approximations that can vary depending upon the desired properties sought to be obtained by those skilled in the art utilizing the teachings disclosed herein or, for example, within typical ranges of experimental error.

The recitation of numerical ranges by endpoints includes all numbers subsumed within that range (e.g. 1 to 5 includes 1, 1.5, 2, 2.75, 3, 3.80, 4, and 5) and any range within that range. Herein, the terms "up to" or "no greater than" a number (e.g., up to 50) includes the number (e.g., 50), and the term "no less than" a number (e.g., no less than 5) includes the number (e.g., 5).

Terms related to orientation, such as "upstream" and "downstream" are used to describe relative positions of components and are not meant to limit the absolute orientation of the embodiments contemplated.

The terms "coupled" or "connected" refer to elements being attached to each other either directly (in direct contact with each other) or indirectly (having one or more elements between and attaching the two elements). Either term may be modified by "operatively" and "operably," which may be used interchangeably, to describe that the coupling or connection is configured to allow the components to interact to carry out functionality.

As used herein, the term "configured to" may be used interchangeably with the terms "adapted to" or "structured to" unless the content of this disclosure clearly dictates otherwise.

The term "or" is generally employed in its inclusive sense, for example, to mean "and/or" unless the context clearly dictates otherwise. The term "and/or" means one or all of the listed elements or a combination of at least two of the listed elements.

The phrases "at least one of," "comprises at least one of," and "one or more of" followed by a list refers to any one of the items in the list and any combination of two or more items in the list.

**Claims**

1. A system comprising:

   a particle separation element (102; 302) comprising:

   one or more microfluidic channels (201; 221; 241; 340) in parallel fluid communication, each microfluidic channel defining:

   an inlet configured to receive a first fluid and particles dispersed in the first fluid, wherein the particles have a different composition than the first fluid, and
   an outlet comprising a first flow branch and a second flow branch;

   a flow routing element (230) positioned along at least one flow branch of at least one outlet;
   a particle sensor (112; 200) positioned along the one or more microfluidic channels (201; 221; 241; 340) configured to provide signal data representing a signal corresponding to the first fluid and the particles dispersed in the first fluid; and
   a controller (110) operably coupled to the flow routing element (230) and operably coupled to the particle sensor (112; 200) to receive the signal data, the controller (110) configured to:

   control the flow routing element (230) to direct fluid flow to the first flow branch of the at least one outlet of at least one microfluidic channel,

   **characterized in that** the controller (110) is configured to:

   determine whether a threshold level of particles is present in at least one microfluidic channel based on the signal data from the particle sensor (112; 200), and
   control the flow routing element (230), in response to determining that the threshold level of particles is present in the at least one microfluidic channel, to direct fluid flow to the second flow branch of the at least one microfluidic channel, and

   wherein the particle separation element (102; 302) comprises a hydrodynamic separator element including one or more hydrodynamic separators, the one or more hydrodynamic separators comprising the one or more microfluidic channels (201; 221; 241; 340), wherein each microfluidic channel is curved.

2. The system according to claim 1, wherein the particle sensor (200) comprises:

   a light source configured to direct a light beam in a frequency band along a path through at least one microfluidic channel, wherein the frequency band is selected to have a different absorbance by the particles than by the first fluid;
   an aperture element defining a light aperture positioned in the path of the light beam from the light source; and
   a light detector positioned to receive the light beam in a sensing area after passing through the at least one microfluidic channel and the light aperture, the light detector configured to provide the signal data representing an amount of light in the frequency band that remains after passing through the at least one microfluidic channel.

3. The system according to claim 1, wherein the particle sensor (112) comprises a capacitance sensor.

4. The system according to any one of claims 1-3, further comprising a source reservoir in fluid communication with the inlet and second flow branch, wherein the first fluid and the particles are pumpable from the source reservoir to the separation element and selectively back to the source reservoir through the second flow branch.

5. The system according to any one of claims 1-4, wherein the particles comprise a second fluid different than the first fluid.

6. The system according to claim 5, wherein the controller (110) is further configured to determine an amount of the second fluid in droplet form per unit volume of the first fluid based on the signal data.

7. The system according to claim 6, wherein the amount excludes the second fluid dissolved in the first fluid.

8. The system according to any one of claims 5-7, wherein the controller (110) is configured to determine a droplet rate or a droplet size of one or more droplets of the second fluid dispersed in the flow of the first fluid based on the signal data.

9. The system according to claim 8, wherein the controller (110) is configured to determine the droplet rate or the droplet size based on at least one of:

a magnitude of a pulse contained within the signal data,
a width of a pulse contained within the signal data,
a first threshold signal level for detecting a minimum size droplet in a sensing area,
a second threshold signal level for detecting a droplet that fills the sensing area, and
a threshold signal level crossing rate.

10. The system according to claim 9, wherein the controller (110) is further configured to determine at least one of:

an amount of second fluid in droplet form per unit volume of the first fluid based on the droplet rate and droplet size;
the droplet size based on the magnitude of a pulse contained within the signal data in response to the signal not crossing the second threshold signal level;
the droplet size based on the width of a pulse contained within the signal data in response to the signal crossing the second threshold signal level; and
the droplet size based on the droplet rate.

11. The system according to any one of claims 5-10, wherein the first fluid comprises a hydrocarbon fluid and the second fluid comprises water.

**Patentansprüche**

1. System, umfassend:

ein Partikeltrennelement (102; 302), umfassend:

einen oder mehrere mikrofluidische Kanäle (201; 221; 241; 340) in paralleler Fluidverbindung, wobei jeder mikrofluidische Kanal Folgendes definiert:

einen Einlass, der so konfiguriert ist, dass er ein erstes Fluid und in dem ersten Fluid dispergierte Partikel aufnimmt, wobei die Partikel eine andere Zusammensetzung als das erste Fluid aufweisen, und
einen Auslass, der einen ersten Strömungszweig und einen zweiten Strömungszweig umfasst,

ein Strömungsleitelement (230), das entlang mindestens eines Strömungszweigs mindestens eines Auslasses positioniert ist;
einen Partikelsensor (112; 200), der entlang des einen oder der mehreren mikrofluidischen Kanäle (201; 221;

241; 340) positioniert ist, der so konfiguriert ist, dass er Signaldaten bereitstellt, die ein Signal darstellen, das dem ersten Fluid und den in dem ersten Fluid dispergierten Partikeln entspricht; und

eine Steuerung (110), die funktionsfähig mit dem Strömungsleitelement (230) gekoppelt ist und funktionsfähig mit dem Partikelsensor (112; 200) gekoppelt ist, um die Signaldaten zu empfangen, wobei die Steuerung (110) so konfiguriert ist, dass sie:

das Strömungsleitelement (230) so steuert, dass ein Fluidstrom zu dem ersten Strömungszweig des mindestens einen Auslasses mindestens eines mikrofluidischen Kanals geleitet wird,

**dadurch gekennzeichnet, dass** die Steuerung (110) so konfiguriert ist, dass sie:

auf der Grundlage der Signaldaten von dem Partikelsensor (112; 200) bestimmt, ob ein Schwellenwert an Partikeln in mindestens einem mikrofluidischen Kanal vorhanden ist, und

das Strömungsleitelement (230) in Reaktion auf die Feststellung, dass der Schwellenwert an Partikeln in dem mindestens einen mikrofluidischen Kanal vorhanden ist, so steuert, dass ein Fluidstrom zu dem zweiten Strömungszweig des mindestens einen mikrofluidischen Kanals geleitet wird, und

wobei das Partikeltrennelement (102; 302) ein hydrodynamisches Trennelement umfasst, das einen oder mehrere hydrodynamische Separatoren beinhaltet, wobei der eine oder die mehreren hydrodynamischen Separatoren den einen oder die mehreren mikrofluidischen Kanäle (201; 221; 241; 340) umfassen, wobei jeder mikrofluidische Kanal gekrümmt ist.

2. System nach Anspruch 1, wobei der Partikelsensor (200) Folgendes umfasst.

eine Lichtquelle, die so konfiguriert ist, dass sie einen Lichtstrahl in einem Frequenzband entlang eines Weges durch mindestens einen mikrofluidischen Kanal lenkt, wobei das Frequenzband so ausgewählt ist, dass es eine andere Absorption durch die Partikel als durch das erste Fluid aufweist;

ein Apertur-Element, das eine Lichtapertur definiert, die in dem Weg des Lichtstrahls von der Lichtquelle positioniert ist; und

einen Lichtdetektor, der so positioniert ist, dass er den Lichtstrahl in einem Erfassungsbereich empfängt, nachdem dieser durch den mindestens einen mikrofluidischen Kanal und die Lichtapertur hindurchgegangen ist, wobei der Lichtdetektor so konfiguriert ist, dass er die Signaldaten bereitstellt, die eine Lichtmenge in dem Frequenzband darstellen, die nach dem Durchgang durch den mindestens einen mikrofluidischen Kanal verbleibt.

3. System nach Anspruch 1, wobei der Partikelsensor (112) einen Kapazitätssensor umfasst.

4. System nach einem der Ansprüche 1-3, das ferner einen Vorratsbehälter umfasst, der in Fluidverbindung mit dem Einlass und dem zweiten Strömungszweig steht, wobei das erste Fluid und die Partikel aus dem Vorratsbehälter zu dem Trennelement und selektiv zurück zu dem Vorratsbehälter durch den zweiten Strömungszweig gepumpt werden können.

5. System nach einem der Ansprüche 1-4, wobei die Partikel ein zweites Fluid umfassen, das sich von dem ersten Fluid unterscheidet.

6. System nach Anspruch 5, wobei die Steuerung (110) ferner so konfiguriert ist, dass sie eine Menge des zweitem Fluids in Tröpfchenform pro Volumeneinheit des ersten Fluids auf der Grundlage der Signaldaten bestimmt.

7. System nach Anspruch 6, wobei die Menge das in dem ersten Fluid gelöste zweite Fluid ausschließt.

8. System nach einem der Ansprüche 5-7, wobei die Steuerung (110) so konfiguriert ist, dass sie eine Tröpfchenrate oder eine Tröpfchengröße von einem oder mehreren Tröpfchen des zweiten Fluids, die in dem Strom des ersten Fluids dispergiert sind, auf der Grundlage der Signaldaten bestimmt.

9. System nach Anspruch 8, wobei die Steuerung (110) so konfiguriert ist, dass sie die Tröpfchenrate oder die Tröpfchengröße auf der Grundlage mindestens eines der Folgenden bestimmt:

einer Größenordnung eines in den Signaldaten enthaltenen Impulses,
einer Breite eines in den Signaldaten enthaltenen Impulses,

eines ersten Schwellensignalwerts zum Erfassen einer Tröpfchen-Mindestgröße in einem Erfassungsbereich, eines zweiten Schwellensignalwerts zum Erfassen eines Tröpfchens, das den Erfassungsbereich ausfüllt, und einer Schwellensignalwert-Überschreitungsrate.

10. System nach Anspruch 9, wobei die Steuerung (110) ferner so konfiguriert ist, dass sie mindestens eines der Folgenden bestimmt:

eine Menge an zweitem Fluid in Tröpfchenform pro Volumeneinheit des ersten Fluids auf der Grundlage der Tröpfchenrate und Tröpfchengröße;
die Tröpfchengröße auf der Grundlage der Größenordnung eines in den Signaldaten enthaltenen Impulses als Reaktion darauf, dass das Signal den zweiten Schwellensignalwert nicht überschreitet;
die Tröpfchengröße auf der Grundlage der Breite eines in den Signaldaten enthaltenen Impulses als Reaktion darauf, dass das Signal den zweiten Schwellensignalwert überschreitet; und
die Tröpfchengröße auf der Grundlage der Tröpfchenrate.

11. System nach einem der Ansprüche 5-10, wobei das erste Fluid ein Kohlenwasserstoff-Fluid umfasst und das zweite Fluid Wasser umfasst.

**Revendications**

1. Système comprenant :

un élément de séparation de particules (102 ; 302) comprenant :

un ou plusieurs canaux microfluidiques (201 ; 221 ; 241 ; 340) en communication fluidique parallèle, chaque canal microfluidique définissant :

un orifice d'entrée configuré pour recevoir un premier fluide et des particules dispersées dans le premier fluide, dans lequel les particules présentent une composition différente de celle du premier fluide, et un orifice de sortie comprenant une première ramification d'écoulement et une seconde ramification d'écoulement ;

un élément d'acheminement d'écoulement (230) positionné le long d'au moins une ramification d'écoulement d'au moins un orifice de sortie ;
un capteur de particules (112 ; 200) positionné le long du un ou plusieurs canaux microfluidiques (201 ; 221 ; 241 ; 340) configuré pour fournir des données de signal représentant un signal correspondant au premier fluide et aux particules dispersées dans le premier fluide ; et
un dispositif de commande (110) fonctionnellement accouplé à l'élément d'acheminement d'écoulement (230) et fonctionnellement accouplé au capteur de particules (112 ; 200) pour recevoir les données de signal, le dispositif de commande (110) configuré pour :
commander à l'élément d'acheminement d'écoulement (230) de diriger un écoulement du fluide vers la première ramification d'écoulement du au moins un orifice de sortie d'au moins un canal microfluidique,

**caractérisé en ce que** le dispositif de commande (110) est configuré pour :

déterminer si un niveau seuil de particules est présent dans au moins un canal microfluidique sur la base des données de signal provenant du capteur de particules (112 ; 200), et
pour commander à l'élément d'acheminement d'écoulement (230), en réponse à une détermination que le niveau seuil de particules est présent dans le au moins un canal microfluidique, de diriger l'écoulement de fluide vers la seconde ramification d'écoulement du au moins un canal microfluidique, et

dans lequel l'élément de séparation de particules (102 ; 302) comprend un élément séparateur hydrodynamique incluant un ou plusieurs séparateurs hydrodynamiques, les un ou plusieurs séparateurs hydrodynamiques comprenant les un ou plusieurs canaux microfluidiques (201 ; 221 ; 241 ; 340), dans lequel chaque canal microfluidique est incurvé.

2. Système selon la revendication 1, dans lequel le capteur de particules (200) comprend :

une source de lumière configurée pour diriger un faisceau de lumière dans une bande de fréquence le long d'un trajet à travers au moins un canal microfluidique, dans lequel la bande de fréquence est sélectionnée pour présenter une absorbance différente par les particules que par le premier fluide ;

un élément d'ouverture définissant une ouverture de lumière positionnée dans le trajet du faisceau de lumière depuis la source de lumière ; et

un détecteur de lumière positionné pour recevoir le faisceau de lumière dans une zone de détection après passage à travers le au moins un canal microfluidique et l'ouverture de lumière, le détecteur de lumière configuré pour fournir les données de signal représentant une quantité de lumière dans la bande de fréquence qui demeure après passage à travers le au moins un canal microfluidique.

3. Système selon la revendication 1, dans lequel le capteur de particules (112) comprend un capteur de capacité.

4. Système selon l'une quelconque des revendications 1 à 3, comprenant en outre un réservoir source en communication fluidique avec l'orifice d'entrée et la seconde ramification d'écoulement, dans lequel le premier fluide et les particules peuvent être pompés depuis le réservoir source vers l'élément de séparation et sélectivement en retour vers le réservoir source à travers la seconde ramification d'écoulement.

5. Système selon l'une quelconque des revendications 1 à 4, dans lequel les particules comprennent un second fluide différent du premier fluide.

6. Système selon la revendication 5, dans lequel le dispositif de commande (110) est en outre configuré pour déterminer une quantité du second fluide sous forme de gouttelettes par volume unitaire du premier fluide sur la base des données de signal.

7. Système selon la revendication 6, dans lequel la quantité exclut le second fluide dissous dans le premier fluide.

8. Système selon l'une quelconque des revendications 5 à 7, dans lequel le dispositif de commande (110) est configuré pour déterminer une vitesse des gouttelettes ou une taille des gouttelettes d'une ou plusieurs gouttelettes du second fluide dispersées dans l'écoulement du premier fluide sur la base des données de signal.

9. Système selon la revendication 8, dans lequel le dispositif de commande (110) est configuré pour déterminer la vitesse des gouttelettes ou la taille des gouttelettes sur la base d'au moins l'un parmi :

une magnitude d'une impulsion contenue à l'intérieur des données de signal,
une largeur d'une impulsion contenue à l'intérieur des données de signal,
un premier niveau de signal seuil pour détecter une gouttelette de taille minimale dans une zone de détection,
un second niveau de signal seuil pour détecter une gouttelette qui remplit la zone de détection, et
un taux de traversée du niveau de signal seuil.

10. Système selon la revendication 9, dans lequel le dispositif de commande (110) est en outre configuré pour déterminer au moins l'une parmi :

une quantité de second fluide sous forme de gouttelettes par volume unitaire du premier fluide sur la base de la vitesse des gouttelettes et de la taille des gouttelettes ;
la taille des gouttelettes sur la base de la magnitude d'une impulsion contenue à l'intérieur des données de signal en réponse au signal ne traversant pas le second niveau de signal seuil ;
la taille des gouttelettes sur la base de la largeur d'une impulsion contenue à l'intérieur des données de signal en réponse au signal traversant le second niveau de signal ; et
la taille des gouttelettes sur la base de la vitesse des gouttelettes.

11. Système selon l'une quelconque des revendications 5 à 10, dans lequel le premier fluide comprend un fluide hydrocarboné et le second fluide comprend de l'eau.

**FIG. 1**

FIG. 2

EP 4 513 167 B1

FIG. 3

FIG. 4

FIG. 5

**FIG. 6**

**FIG. 7**

**FIG. 8**

EP 4 513 167 B1

**FIG. 9**

EP 4 513 167 B1

FIG. 10

EP 4 513 167 B1

FIG. 11A

FIG. 11B

FIG. 12

EP 4 513 167 B1

FIG. 13A

FIG. 13B

FIG. 13C

FIG. 13D

EP 4 513 167 B1

FIG. 14

FIG. 15

# EP 4 513 167 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012122084 A1
- US 2019084011 A1
- CN 108318394 A
- CN 101765762 A
- US 2019034809 W